# EUROPÄISCHE PATENTSCHRIFT

(11) **EP 3 649 773 B1**
(45) Veröffentlichungstag und Bekanntmachung des Hinweises auf die Patenterteilung: **24.08.2022**
(21) Anmeldenummer: 18746844.2
(22) Anmeldetag: 04.07.2018
(51) Int. Cl.: H04N 5/225, G02B 26/08, G02B 5/00

(54) **MULTIAPERTURABBILDUNGSVORRICHTUNG MIT GERINGER FALSCHLICHTEMPFINDLICHKEIT, ABBILDUNGSSYSTEM UND VERFAHREN ZUM BEREITSTELLEN EINER MULTIAPERTURABBILDUNGSVORRICHTUNG**
MULTI-APERTURE IMAGING APPARATUS HAVING LOW SENSITIVITY TO STRAY LIGHT, IMAGING SYSTEM, AND METHOD FOR PROVIDING A MULTI-APERTURE IMAGING APPARATUS
DISPOSITIF D'IMAGERIE MULTI-OUVERTURE AYANT UNE FAIBLE SENSIBILITÉ À LA LUMIÈRE PARASITE, SYSTÈME ET PROCÉDÉ D'IMAGERIE PERMETTANT D'OBTENIR UN DISPOSITIF D'IMAGERIE MULTI-OUVERTURE

(30) Priorität: 06.07.2017 DE 102017211586
(43) Veröffentlichungstag der Anmeldung: 13.05.2020
(73) Patentinhaber: Fraunhofer-Gesellschaft zur Förderung der angewandten Forschung e.V., 80686 München (DE)
(72) Erfinder: WIPPERMANN, Frank, 07745 Jena (DE); DUPARRÉ, Jacques, 07745 Jena (DE)
(74) Vertreter: König, Andreas Rudolf
(86) Internationale Anmeldenummer: PCT/EP2018/068140
(87) Internationale Veröffentlichungsnummer: WO 2019/008063

(56) Entgegenhaltungen:
- DE-A1-102015 220 566
- US-A1- 2014 055 624

## Beschreibung

Die vorliegende Erfindung bezieht sich auf eine Multiaperturabbildungsvorrichtung, auf ein Abbildungssystem und auf ein Verfahren zum Bereitstellen einer Multiaperturabbildungsvorrichtung. Die vorliegende Erfindung bezieht sich ferner auf eine Multiaperturabbildungsvorrichtung und ein Multiaperturabbildungssystem mit einer möglicherweise flexiblen Blende an einer Einrichtung für ein Umschalten der Blickrichtung.

Konventionelle Kameras besitzen einen Abbildungskanal, der das gesamte Objektfeld abbildet. Die Kameras besitzen adaptive Komponenten, die eine relative laterale, zweidimensionale Verschiebung zwischen Objektiv und Bildsensor zur Realisierung einer optischen Bildstabilisierungsfunktion zu ermöglichen.

Multiaperturabbildungssysteme mit linearer Kanalanordnung bestehen aus mehreren Abbildungskanälen, die jeweils nur einen Teil des Objekts aufnehmen und einen Umlenkspiegel enthalten. Der Umlenkspiegel kann drehbar gelagert sein und unter anderem eine Umschaltung der Blickrichtung ermöglichen, so dass dieselbe Kamera in verschiedene Blickrichtungen schauen kann, wobei die Blickrichtungen z. B. einen Winkel von 180° bilden.

In DE 10 2015 220 566 A1 wird eine Vorrichtung beschrieben, die ein Gehäuse und eine Multiaperturabbildungsvorrichtung umfasst. Die Multiaperturabbildungsvorrichtung umfasst ein Array von nebeneinander angeordneten optischen Kanälen und eine Strahlumlenkeinrichtung zum Umlenken eines Strahlengangs der optischen Kanäle.

Wünschenswert wären Konzepte zum mehrkanaligen Erfassen von Objektbereichen oder Gesichtsfeldern, die eine hochqualitative Bilderfassung ermöglichen.

Die Aufgabe der vorliegenden Erfindung besteht deshalb darin, eine Multiaperturabbildungsvorrichtung, ein Abbildungssystem und ein Verfahren zum Bereitstellen einer Multiaperturabbildungsvorrichtung zu schaffen, die eine Bilderfassung mit einer hohen Bildqualität ermöglichen.

Diese Aufgabe wird durch den Gegenstand der unabhängigen Patentansprüche gelöst.

Eine Erkenntnis der vorliegenden Erfindung besteht darin, erkannt zu haben, dass durch Anordnen einer zusätzlichen Blendenstruktur zum Verschließen eines Spalts zwischen einer Strahlumlenkeinrichtung und einem Array von optischen Kanälen ein Eintritt von Falschlicht aus einer Richtung, in die die Multiaperturabbildungsvorrichtung derzeit nicht blickt, reduziert oder gar verhindert werden kann, so dass basierend auf einem geringen Grad von Falschlicht eine hohe Qualität der Bildaufnahme erhalten werden kann.

Gemäß einem Ausführungsbeispiel umfasst eine Multiaperturabbildungsvorrichtung die Merkmale des Anspruchs 1. Ein weiteres Ausführungsbeispiel bezieht sich auf ein Verfahren zum Bereitstellen einer Multiaperturabbildungsvorrichtung.

Weitere vorteilhafte Ausführungsformen sind der Gegenstand der abhängigen Patentansprüche.

Bevorzugte Ausführungsbeispiele der vorliegenden Erfindung werden nachfolgend Bezug nehmend auf die beiliegenden Zeichnungen erläutert. Es zeigen:
- Fig. 1: eine schematische perspektivische Ansicht einer Multiaperturabbildungsvorrichtung gemäß einem Ausführungsbeispiel;
- Fig. 2: eine schematische Seitenschnittansicht einer Multiaperturabbildungsvorrichtung gemäß einem Ausführungsbeispiel, bei dem ein Array optischer Kanäle einzeilig gebildet ist;
- Fig. 3: eine schematische Seitenschnittansicht einer Multiaperturabbildungsvorrichtung gemäß einem Ausführungsbeispiel, bei dem die Strahlumlenkeinrichtung ausgebildet ist, um eine Rotationsbewegung um eine Drehachse auszuführen;
- Fig. 4a-f: vorteilhafte Ausgestaltungen einer Strahlumlenkeinrichtung gemäß Ausführungsbeispielen;
- Fig. 5a: eine schematische Ansicht einer Multiaperturabbildungsvorrichtung gemäß einem Ausführungsbeispiel in einer ersten rotatorischen Stellung der Strahlumlenkeinrichtung, in welcher eine Blendenstruktur einen Spalt verschließt;
- Fig. 5b: eine schematische Ansicht der Multiaperturabbildungsvorrichtung aus Fig. 5a in der zweiten Stellung der Strahlumlenkeinrichtung dargestellt, wobei die Blendenstruktur einen Spalt an einer anderen Stelle verschließt;
- Fig. 5c: eine schematische Ansicht der Multiaperturabbildungsvorrichtung aus Fig. 5a in einer optionalen Zwischenstellung zwischen der ersten Stellung und der zweiten Stellung;
- Fig. 6: eine schematische Seitenschnittansicht einer Multiaperturabbildungsvorrichtung gemäß einem Ausführungsbeispiel die einen optischen Bildstabilisator aufweist;
- Fig. 7: eine schematische perspektivische Ansicht einer Multiaperturabbildungsvorrichtung gemäß einem Ausführungsbeispiel, die transparente Strukturen aufweist, die entlang der Blickrichtungen der Multiaperturabbildungsvorrichtung ausgehend von der Strahlumlenkeinrichtung angeordnet sind;
- Fig. 8: eine schematische Seitenschnittansicht einer Multiaperturabbildungsvorrichtung gemäß einem Ausführungsbeispiel, die optional die transparenten Strukturen umfassen kann, ohne weiteres jedoch auch ohne dieselben ausführbar ist;
- Fig. 9: eine schematische Darstellung eines Gesamtgesichtsfelds gemäß einem Ausführungsbeispiel, wie es beispielsweise mit einer vorangehend beschriebenen Multiaperturabbildungsvorrichtung erfassbar ist;
- Fig. 10: eine schematische perspektivische Ansicht eines Abbildungssystems, das ein Gehäuse und zumindest eine erste und eine zweite Multiaperturabbildungsvorrichtung aufweist;
- Fig. 11: einen schematischen Aufbau umfassend eine erste Multiaperturabbildungsvorrichtung und eine zweite Multiaperturabbildungsvorrichtung, wie er beispielsweise in dem Abbildungssystem aus Fig. 10 angeordnet sein kann, gemäß einem Ausführungsbeispiel; und
- Fig. 12: ein schematisches Flussdiagramm eines Verfahrens zum Bereitstellen einer Multiaperturabbildungsvorrichtung, gemäß einem Ausführungsbeispiel.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

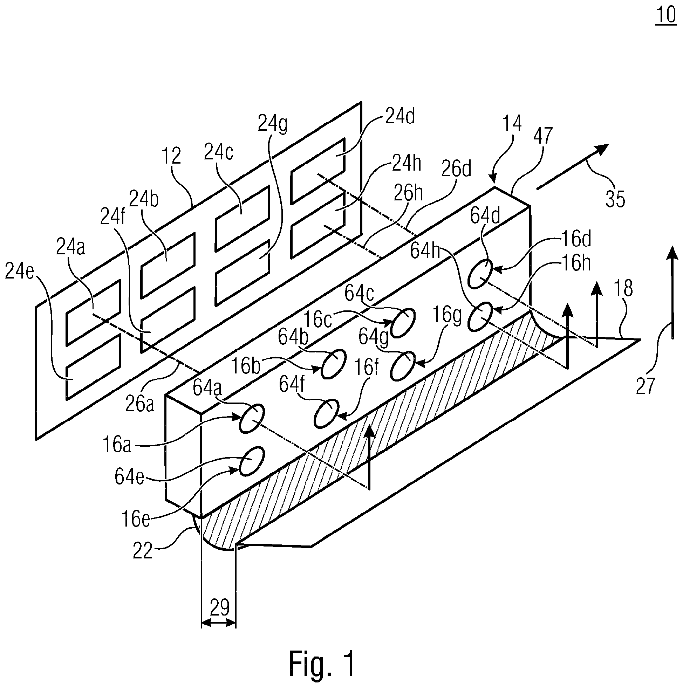

Fig. 1 zeigt eine schematische perspektivische Ansicht einer Multiaperturabbildungsvorrichtung 10 gemäß einem Ausführungsbeispiel. Die Multiaperturabbildungsvorrichtung 10 umfasst einen Bildsensor, ein Array von optischen Kanälen 16a-h, eine Strahlumlenkeinrichtung 18 und eine Blendenstruktur 22. Jeder optische Kanal 16a-h umfasst eine Optik 64a-h zur Abbildung eines Teilgesichtsfelds eines Gesamtgesichtsfelds auf einen Bildsensorbereich 24a-h des Bildsensors 12. Die optischen Kanäle 16a-h können als ein Verlauf von Strahlengängen 26a-h verstanden werden. Die Strahlengänge 26a-h können durch die in dem Array 14 angeordnete jeweilige Optik 64a-h beeinflusst sein, etwa durch Streuung oder Bündelung. Die einzelnen optischen Kanäle 16a-h können jeweils eine vollständige Abbildungsoptik bilden oder umfassen und mindestens eine optische Komponente bzw. Optik, etwa eine refraktive, diffraktive oder hybride Linse aufweisen und können einen Ausschnitt des mit der Multiaperturabbildungsvorrichtung insgesamt aufgezeichneten Gesamtobjekts abbilden. Das bedeutet, eine, mehrere oder alle der Optiken 64a-h können auch eine Kombination von optischen Elementen sein. Bezüglich eines, mehreren oder allen der optischen Kanäle 16a-h kann eine Apperturblende angeordnet sein.

Die Bildsensorbereiche 24a-h können beispielsweise jeweils aus einem Chip gebildet sein, der ein entsprechendes Pixelarray umfasst, wobei die Bildsensorbereiche 24a-h auf einem gemeinsamen Substrat bzw. einem gemeinsamen Schaltungsträger, wie einer gemeinsamen Platine oder einem gemeinsamen Flexboard montiert sein können. Alternativ wäre es natürlich auch möglich, dass die Bildsensorbereiche 24a-h jeweils aus einem Teil eines gemeinsamen Pixelarrays, das sich kontinuierlich über die Bildsensorbereiche 24a-h erstreckt, gebildet sind, wobei das gemeinsame Pixelarray beispielsweise auf einem einzelnen Chip gebildet ist. Beispielsweise werden dann lediglich die Pixelwerte des gemeinsamen Pixelarrays in den Bildsensorbereichen 24a-h ausgelesen. Verschiedene Mischungen dieser Alternativen sind natürlich ebenfalls möglich, wie z. B. das Vorhandensein eines Chips für zwei oder mehr optische Kanäle und eines weiteren Chips für wiederum andere optische Kanäle oder dergleichen. In dem Fall mehrerer Chips des Bildsensors 12 können diese beispielsweise auf einer oder mehreren Platinen oder Schaltungsträgern montiert sein, wie z. B. alle gemeinsam oder gruppenweise oder dergleichen.

Die Strahlumlenkeinrichtung 18 ist ausgebildet, um die Strahlengänge 26a-h der optischen Kanäle 16a-h umzulenken. Hierfür kann die Strahlumlenkeinrichtung 18 beispielsweise eine reflektierende Hauptseite aufweisen, die den Optiken 64a-h bzw. dem Array 14 zugewandt und diesbezüglich geneigt ist. Durch die Neigung können die Strahlengänge 26a-h in eine Blickrichtung 27 umgelenkt werden, wobei die Blickrichtung 27 eine relative Richtung bezüglich der Multiaperturabbildungsvorrichtung 10 beschreiben kann, entlang der der zu erfassende Objektbereich angeordnet ist.

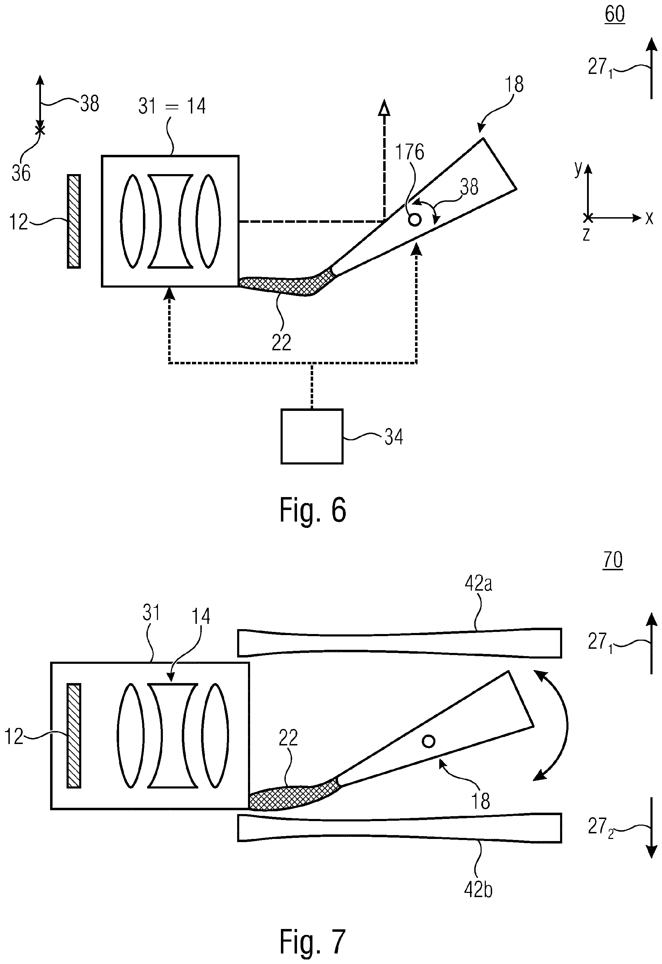

Das Array kann mit einem Abstand zu der Strahlumlenkeinrichtung angeordnet einen Träger zum Haltern der Optiken, ein Gehäuse des Arrays oder und/oder eine transparente Struktur, die ausgebildet ist, um einen Eintritt von Partikeln zu der Strahlumlenkeinrichtung zumindest teilweise zu reduzieren, aufweisen, wobei der Abstand den Spalt bildet. Zwischen dem Array 14 und der Strahlumlenkeinrichtung 18 ist ein Spalt 29, d. h. ein Abstand, angeordnet. Die Multiaperturabbildungsvorrichtung 10 ist dabei so ausgeführt, dass die Blendenstruktur 22 den Spalt 29 zumindest teilweise verschließt. Dabei kann die Blendenstruktur 22 wie dargestellt mit dem Array 14 bzw. einem Träger 47 und/oder der Strahlumlenkeinrichtung 18 überlappen. Das bedeutet, die Blendenstruktur 22 kann in mechanischem Kontakt mit dem Array 14 und/oder der Strahlumlenkeinrichtung 18 stehen und außerhalb eines Bereichs oder Volumens, der bzw. das räumlich zwischen der Strahlumlenkeinrichtung 18 und dem Array 14 angeordnet ist, angeordnet sein. Alternativ zu dem mechanischen Kontakt mit dem Array 14 kann die Blendenstruktur 22 mit einer transparenten Struktur in mechanischem Kontakt stehen, etwa einer transparenten Struktur 42, die im Zusammenhang mit der Fig. 7 erläutert ist. Alternativ kann die Blendenstruktur 22 an dem Array 14 und/oder der Strahlumlenkeinrichtung 18 so angeordnet sein, dass sich die Blendenstruktur räumlich zwischen dem Array 14 und der Strahlumlenkeinrichtung 18 befindet. In beiden Fällen wird der Spalt 29 zwischen dem Array 14 und der Strahlumlenkeinrichtung 18 zumindest teilweise, d. h., zumindest 50 %, zumindest 70 %, zumindest 90 % oder bevorzugt vollständig, verschlossen.

Durch die optischen Kanäle kann eine Mehrzahl oder Vielzahl von Teilgesichtsfeldern eines Gesamtgesichtsfeldes erfassbar sein, wobei jedes Teilgesichtsfeld von zumindest einem optischen Kanal 16a-h erfassbar ist. Jedem optischen Kanal kann somit ein Teilgesichtsfeld zugeordnet sein, welches mit dem optischen Kanal erfasst wird. Jedem Teilgesichtsfeld kann, bspw. ausgehend von der Multiaperturabbildungsvorrichtung 10 und/oder der Strahlumlenkeinrichtung 18 eine Richtung zugeordnet sein, in die der jeweiligen Strahlengang 26a-h des optischen Kanals 16a-h mit der Strahlumlenkeinrichtung 18 umgelenkt wird. Die Blendenstruktur 22 kann ausgebildet sein, um einen Eintritt von Licht zu verhindern oder zumindest teilweise zu reduzieren, insbesondere aus einer Richtung, die von den Richtungen verschieden ist, die den Teilgesichtsfeldern der aktuell eingestellten Blickrichtung zugeordnet sind. Durch die Anordnung der Blendenstruktur 22 an einem entgegen der Blickrichtung 27 liegenden oder angeordneten Ende des Trägers 47 und/oder der Strahlumlenkeinrichtung 18 kann ein Eintritt von Falschlicht aus der Richtung entgegengesetzt zu der Blickrichtung 27 zumindest teilweise reduziert werden. Wird der Spalt 29 vollständig verschlossen und ist die Blendenstruktur 22 vollständig opak ausgebildet, kann ein Umfang des Falschlichts bspw. aus der Richtung entgegensetzt der Blickrichtung oder auch weiteren Richtungen sogar vollständig reduzierbar sein. Mit einem zunehmenden Maß an Reduzierung des Falschlichts kann in zunehmendem Maß eine Erhöhung der Bildqualität erhalten werden.

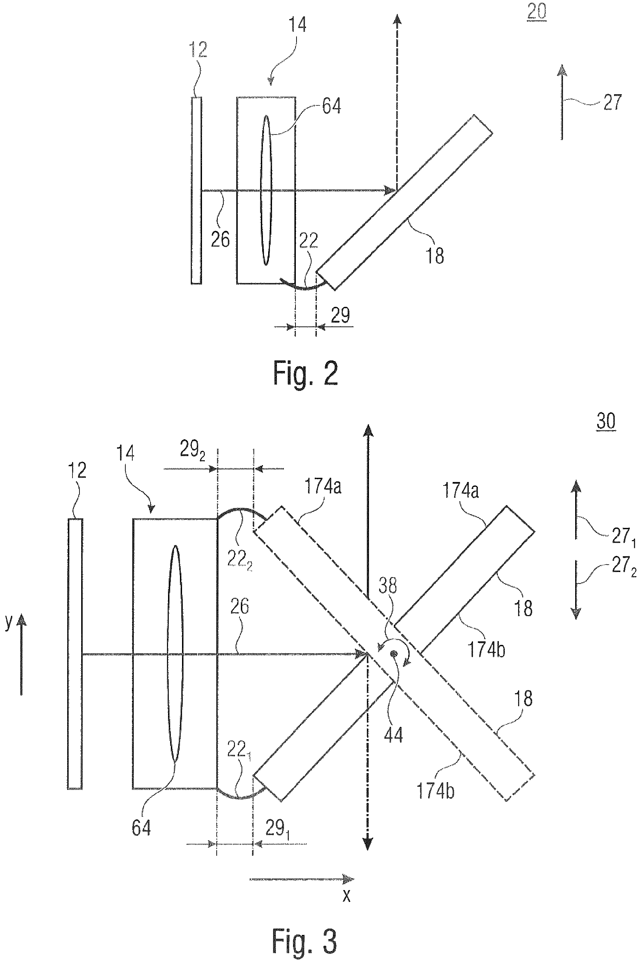

Fig. 2 zeigt eine schematische Seitenschnittansicht einer Multiaperturabbildungsvorrichtung 20 gemäß einem Ausführungsbeispiel, bei dem das Array 14 einzeilig gebildet ist, das bedeutet, im Gegensatz zu dem zweizeiligen Array aus Fig. 1 kann lediglich eine Zeile von Optiken 64 angeordnet sein.

Die Blendenstruktur 22 kann mit zumindest einem des Arrays 14 und/oder der Strahlumlenkeinrichtung 18 mechanisch fest verbunden sein und so von diesem Element gehalten werden. An dem anderen Element kann ein loser oder ebenfalls fester mechanischer Kontakt erhalten werden, um den Spalt 29 zu verschließen.

Fig. 3 zeigt eine schematische Seitenschnittansicht einer Multiaperturabbildungsvorrichtung 30 gemäß einem weiteren Ausführungsbeispiel, bei dem die Strahlumlenkeinrichtung 18 ausgebildet ist, um eine Rotationsbewegung 38 um eine Drehachse 44 auszuführen, wobei basierend auf der Rotationsbewegung 38 eine erste Stellung und eine zweite Stellung der Strahlumlenkeinrichtung 18 erhalten werden kann. Die Strahlumlenkeinrichtung 18 ist ausgebildet, um in der ersten Stellung die Strahlengänge 26 in eine erste Blickrichtung 27₁ zu lenken. Die Strahlumlenkeinrichtung 18 ist ferner ausgebildet, um in einer zweiten Stellung, die durch gestrichpunktete Linien dargestellt ist, die Strahlengänge 26 in eine zweite Blickrichtung 27₂ umzulenken. Die Strahlumlenkeinrichtung 18 kann beispielsweise zwei gegenüberliegende und reflektierend gebildete Hauptseiten 174a und 174b aufweisen, wobei in den unterschiedlichen Stellungen unterschiedliche reflektierende Hauptseiten 174a oder 174b den Optiken 64 zugewandt sind. Das bedeutet, in den unterschiedlichen Stellungen lenkt die Strahlumlenkeinrichtung 18 die Strahlengänge 26 mit unterschiedlichen Hauptseiten um.

Basierend auf Stellungen zwischen denen durch die Rotationsbewegung 38 umgeschaltet werden kann, kann in einer ersten Stellung ein erster Spalt 29₁ von einer Blendenstruktur 22₁ zumindest teilweise verschlossen sein, wie es beispielsweise im Zusammenhang mit der Multiaperturabbildungsvorrichtung 20 beschrieben ist. Basierend auf der Rotationsbewegung 38 kann sich der Spalt 29₁ in seiner Abmessung entlang einer Richtung x, die parallel zu einer Richtung ausgehend vom Bildsensor 12 zu der Strahlumlenkeinrichtung 18 und parallel zu einer Zeilenerstreckungsrichtung des Arrays 14 verläuft, verändern. In der zweiten Stellung kann der Spalt 29₂ durch die Blendenstruktur 22₂ verschlossen sein, um einen Eintritt von Falschlicht aus der ungenutzten Blickrichtung 27₁ zu verhindern.

Gemäß manchen Anforderungen an Multiaperturabbildungsvorrichtungen ist eine geringe oder gar minimale Höhe der Multiaperturabbildungsvorrichtung entlang einer Richtung senkrecht zu der x-Richtung und senkrecht zu der Zeilenerstreckungsrichtung gewünscht, etwa entlang einer y-Richtung, die auch als Dickenrichtung bezeichnet werden kann. Durch die diagonale Anordnung der Strahlumlenkeinrichtung 18 bezüglich des Bildsensors 12 und/oder dem Array 14 kann ein Flächenabmaß der Strahlumlenkeinrichtung 18 vergleichsweise größer sein als eine Fläche des Bildsensors 12, um eine vollständige Abbildung und/oder Umlenkung des Strahlengangs 26 zu ermöglichen. Das bedeutet, würde die Strahlumlenkeinrichtung 18 so geneigt, dass die Hauptseiten 174a und/oder 174b parallel zu der y-Richtung angeordnet sind, so würde die Strahlumlenkeinrichtung 18 das Array 14 und/oder den Bildsensor 12 möglicherweise überragen, was dem Bestreben der minimalen Bauhöhe entgegenspricht.

Zum Umschalten zwischen den beiden illustrierten Stellungen ist es ebenfalls möglich, die Ansteuerung der Strahlumlenkeinrichtung 18 so vorzunehmen, dass in einer Stellung zwischen der ersten und zweiten Stellung die Hauptseiten 174a und/oder 174b parallel zu der x-Richtung verlaufen. In diesem Falls können sich Nebenseiten der Strahlumlenkeinrichtung 18 während der Bewegung an das Array 14 annähern und/oder von diesem entfernen, so dass der Spalt 29₁ und/oder 29₂ in seiner Abmessung veränderlich ist. Gleichzeitig ist jedoch ein endlicher Abstand zwischen der Strahlumlenkeinrichtung 18 und dem Array 14 erforderlich, um die entsprechende Bewegung zu ermöglichen. Dieser Abstand führt zu den Spalten 29₁ und/oder 29₂, welche durch die beschriebenen Blendenstrukturen 22₁ und/oder 22₂ verschlossen werden können, um einen Eintritt von Falschlicht durch die entsprechende Spalte zumindest teilweise zu verhindern.

In anderen Worten kann es erforderlich sein, einen Abstand zwischen einer vorderen Kante des Spiegels (Strahlumlenkeinrichtung) und dem anschließenden Array aus Abbildungsoptiken einzustellen, damit sich der Umlenkspiegel drehen kann. Dieser Spalt ist transparent und damit lichtdurchlässig. Hierdurch kann in nachteiliger Weise Licht aus einer Richtung in den Aufbau eindringen, die nicht der beabsichtigten Blickrichtung der Kamera entspricht und welches damit die Abbildungsqualität verschlechtert. Diesem Effekt kann mit den Blendenstrukturen 22₁ und/oder 22₂ entgegengewirkt werden.

An der Seite/Kante der Strahlumlenkeinrichtung der Multiaperturabbildungsvorrichtung mit linearer Kanalanordnung kann eine sich über die gesamte Ausdehnung der Strahlumlenkeinrichtung erstreckende und damit die gesamte Breite des Array-Objektivs erstreckende Blende aus opakem und/oder flexiblem Material angeordnet sein. Diese kann beispielsweise einer Dichtlippe ähneln.

Bevor nachfolgend weitere Details zu hierin beschriebenen Multiaperturabbildungsvorrichtungen erläutert werden, soll auf eine bevorzugte Ausführungsform der Strahlumlenkeinrichtung 18 eingegangen werden. Obwohl diese auch als planarer Spiegel oder als doppelseitiger Spiegel gebildet werden kann, kann basierend auf einer keilförmigen Form eine platzsparende Realisierung erhalten werden. Ferner können mehrere Keile in der Strahlumlenkeinrichtung 18 angeordnet sein und jeweils eine Facette derselben bilden, wobei jeder optische Kanal der Multiaperturabbildungsvorrichtung einer Facette zugeordnet ist. Durch unterschiedliche Neigungen der Facetten zu einer Referenzposition der Strahlumlenkeinrichtung können die Strahlengänge in unterschiedliche Richtungen umgelenkt werden, was einer Divergenz der Richtungsumlenkung, d. h. einer unterschiedlichen Richtungsumlenkung oder einer Differenz zwischen zwei Richtungsumlenkungen ermöglicht, so dass unterschiedliche Teilbereiche des Gesamtobjektbereichs erfassbar sind.

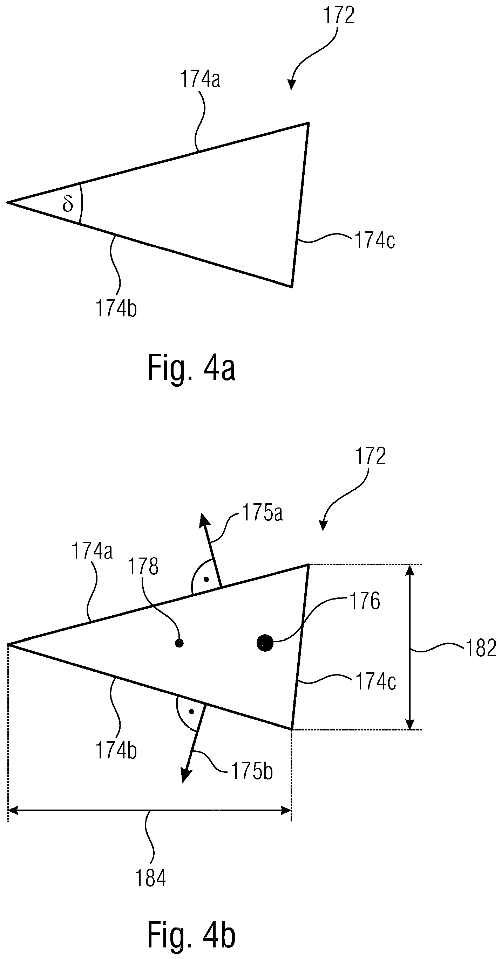

Anhand der Fig. 4a-f werden vorteilhafte Ausgestaltungen der Strahlumlenkeinrichtung 18 beschrieben. Die Ausführungen zeigen eine Reihe von Vorteilen auf, die einzeln oder in beliebiger Kombination mit einander ausführbar sind, jedoch nicht einschränkend wirken sollen.

Fig. 4a zeigt eine schematische Seitenschnittansicht eines Strahlumlenkelements 172, das in hierin beschriebenen Strahlumlenkeinrichtungen als einer der Strahlumlenkbereiche 46 einsetzbar ist. Das Strahlumlenkelement 172 kann für einen, eine Mehrzahl oder alle der optischen Kanäle 16a-d wirksam sein und einen polygonzugartigen Querschnitt aufweisen. Obwohl ein dreieckiger Querschnitt gezeigt ist, kann es sich auch um ein beliebiges anderes Polygon handeln. Alternativ oder zusätzlich kann der Querschnitt auch zumindest eine gekrümmte Oberfläche aufweisen, wobei ins-besondere bei reflektierenden Oberflächen eine zumindest abschnittsweise ebene Ausbildung vorteilhaft sein kann, um Abbildungsfehler zu vermeiden. Die beiden Hauptseiten 174a und 174b können um einen Winkel δ zueinander geneigt sein. Der Winkel δ kann einen Wert zwischen 1° und 89° aufweisen, weist bevorzugt einen Wert zwischen 5° und 60° und besonders bevorzugt einen Wert zwischen 10° und 30° auf. Die Hauptseiten 174a und 174b sind also bevorzugt in einem Winkel von höchstens 60° geneigt zu einander angeordnet.

Das Strahlumlenkelement 172 weist bspw. eine erste Seite 174a, eine zweite Seite 174b und eine dritte Seite 174c auf. Zumindest zwei Seiten, etwa die Seiten 174a und 174b sind reflektiv ausgebildet, so dass das Strahlumlenkelement 172 beidseitig reflektiv ausgebildet ist. Bei den Seiten 174a und 174b kann es sich um Hauptseiten des Strahlumlenkelements 172 handeln, also Seiten, deren Fläche größer ist, als die Seite 174c.

In anderen Worten kann das Strahlumlenkelement 172 keilförmig und beidseitig reflektiv gebildet sein. Der Fläche 174c gegenüberliegend, also zwischen den Flächen 174a und 174b, kann eine weitere Fläche angeordnet sein, die jedoch wesentlich kleiner als die Fläche 174c ist. Mit anderen Worten verläuft der durch die Flächen 174a, 174b und 174c gebildete Keil nicht beliebig spitz zu, sondern ist an der spitzen Seite mit einer Fläche versehen und mithin abgestumpft.

Fig. 4b zeigt eine schematische Seitenschnittansicht des Strahlumlenkelements 172, bei dem eine Aufhängung oder eine Verschiebeachse 176 des Strahlumlenkelements 172 beschrieben ist. Bei der Verschiebeachse 176 kann es sich bspw. um die Drehachse 44 handeln. Die Verschiebeachse 176, um die das Strahlumlenkelement 172 rotatorisch und/oder translatorisch in der Strahlumlenkeinrichtung 18 bewegbar sein kann, kann exzentrisch bezüglich eines Flächenschwerpunktes 178 des Querschnitts verschoben sein. Der Flächenschwerpunkt kann alternativ auch ein Punkt sein, der die hälftige Abmessung des Strahlumlenkelements 172 entlang einer Dickenrichtung 182 und entlang einer Richtung 184 senkrecht hierzu beschreibt.

Die Hauptseite 174a kann eine Oberflächennormale 175a aufweisen, während die Hauptseite 174b eine Oberflächennormale 175b aufweisen kann. Wird eine rotatorische Bewegung um die Verschiebeachse 176 genutzt, um zwischen der ersten Stellung und der zweiten Stellung der Strahlumlenkeinrichtung umzuschalten, so kann die rotatorische Bewegung der Strahlumlenkeinrichtung so ausgeführt werden, dass zwischen den beiden Stellungen eine Orientierung gemäß welcher eine der Hauptseiten 174a oder 174b dem Array 14 vollständig zugewandt ist, vermieden ist, wie es im Zusammenhang mit Fig. 3 beschrieben ist. Dies kann auch so verstanden werden, dass während eines Wechsels zwischen dem ersten und dem zweiten Betriebszustand oder Stellung durch die rotatorische Bewegung die Oberflächennormale 175a und die Oberflächennormale 175b der zweiten Hauptseite zu jedem Zeitpunkt einen Winkel von zumindest 10° bezogen auf eine Richtung hin zu dem Bildsensor und ggf. parallel zu einer Oberflächennormalen des Bildsensors aufweisen. So kann vermieden werden, dass einer der Winkel 0° oder 180° beträgt, was eine hohe oder näherungsweise maximale Ausdehnung der Strahlumlenkeinrichtung entlang der Dickenrichtung bedeuten kann.

Die Verschiebeachse 176 kann bspw. entlang einer Dickenrichtung 182 unverändert und einen beliebigen Versatz in einer Richtung senkrecht hierzu aufweisen. Alternativ ist auch ein Versatz entlang der Dickenrichtung 182 vorstellbar. Die Verschiebung kann bspw. so erfolgen, dass bei einer Rotation des Strahlumlenkelements 172 um die Verschiebeachse 176 ein höherer Stellweg erhalten wird, als bei einer Rotation um den Flächenschwerpunkt 178. So kann sich durch die Verschiebung der Verschiebeachse 176 der Weg, um den die Kante zwischen den Seiten 174a und 174b bei einer Rotation bewegt wird bei gleichem Rotationswinkel verglichen mit einer Rotation um den Flächenschwerpunkt 178 erhöhen. Bevorzugt ist das Strahlumlenkelement 172 so angeordnet, dass die Kante, also die spitze Seite des keilförmigen Querschnitts, zwischen den Seiten 174a und 174b dem Bildsensor zugewandt ist. Durch geringe Rotationsbewegungen kann somit eine jeweils andere Seite 174a oder 174b den Strahlengang der optischen Kanäle umlenken. Hierbei wird deutlich, dass die Rotation so ausgeführt werden kann, dass ein Raumbedarf der Strahlumlenkeinrichtung entlang der Dickenrichtung 182 gering ist, da eine Bewegung des Strahlumlenkelements 172 so, dass eine Hauptseite senkrecht zum Bildsensor steht, nicht erforderlich ist.

Die Seite 174c kann auch als Nebenseite oder als Rückseite bezeichnet werden. Mehrere Strahlumlenkelemente können so miteinander verbunden werden, dass ein verbindendes Element an der Seite 174c angeordnet ist, oder durch den Querschnitt der Strahlumlenkelemente verläuft, also im Inneren der Strahlumlenkelemente angeordnet ist, etwa im Bereich der Verschiebeachse 176. Insbesondere kann das haltende Element so angeordnet sein, dass es nicht oder lediglich in geringem Umfang, d. h., höchstens 50 %, höchstens 30 % oder höchstens 10 % über das Strahlumlenkelement 172 entlang der Richtung 182 hinausragt, so dass das Halteelement nicht die Ausdehnung des Gesamtaufbaus entlang der Richtung 182 erhöht oder bestimmt. Die Ausdehnung in Dickenrichtung 182 kann alternativ durch die Linsen der optischen Kanäle bestimmt sein, d. h. diese weisen die das Minimum der Dicke definierende Abmessung auf.

Das Strahlumlenkelement 172 kann aus Glas, Keramik, Glaskeramik, Kunststoff, Metall oder einer Kombination dieser Materialien und /oder weiterer Materialien gebildet sein.

In anderen Worten kann das Strahlumlenkelement 172 so angeordnet sein, dass die Spitze, d. h., die Kante zwischen den Hauptseiten 174a und 174b zum Bildsensor zeigt. Eine Haltung der Strahlumlenkelemente kann so erfolgen, dass sie lediglich an der Rückseite oder im Inneren der Strahlumlenkelemente erfolgt, d. h. die Hauptseiten werden nicht verdeckt. Ein gemeinsames haltendes oder verbindendes Element kann sich über die Rückseite 174c erstrecken. Die Drehachse des Strahlumlenkelements 172 kann exzentrisch angeordnet sein.

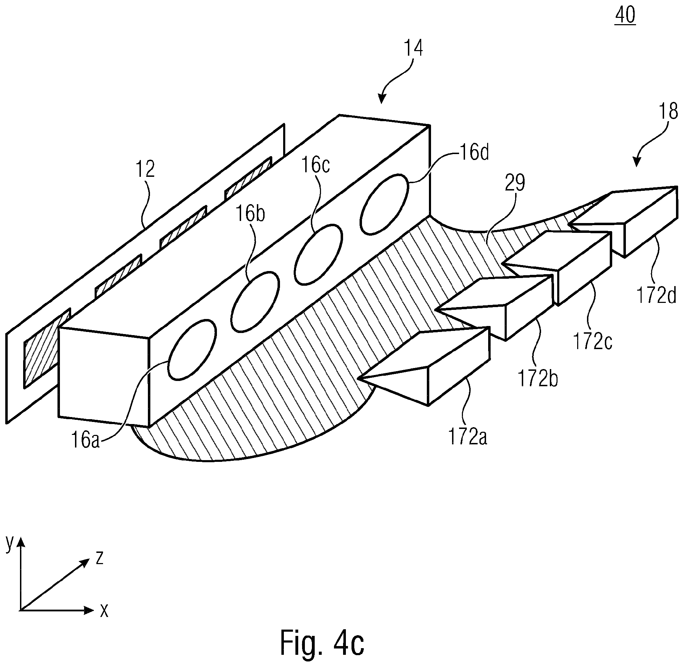

Fig. 4c zeigt eine schematische perspektivische Ansicht einer Multiaperturabbildungsvorrichtung 40, die einen Bildsensor 12, und ein einzeiliges Array 14 von nebeneinander angeordneten optischen Kanälen 16a-d umfasst. Die Strahlumlenkeinrichtung 18 umfasst eine Anzahl von Strahlumlenkelementen 172a-d, die der Anzahl von optischen Kanälen entsprechen kann. Alternativ kann eine geringere Anzahl von Strahlumlenkelementen angeordnet sein, etwa wenn zumindest ein Strahlumlenkelement von zwei optischen Kanälen genutzt wird. Alternativ kann auch eine höhere Anzahl angeordnet sein, etwa wenn eine Umschaltung der Umlenkrichtung der Strahlumlenkeinrichtung 18 durch eine translatorische Bewegung erfolgt. Jedes Strahlumlenkelement 172a-d kann einem optischen Kanal 16a-d zugeordnet sein. Die Strahlumlenkelemente 172a-d können als eine Vielzahl von Elementen 172 gebildet sein. Alternativ können zumindest zwei, mehrere oder alle Strahlumlenkelemente 172a-d einstückig mit einander gebildet sein.

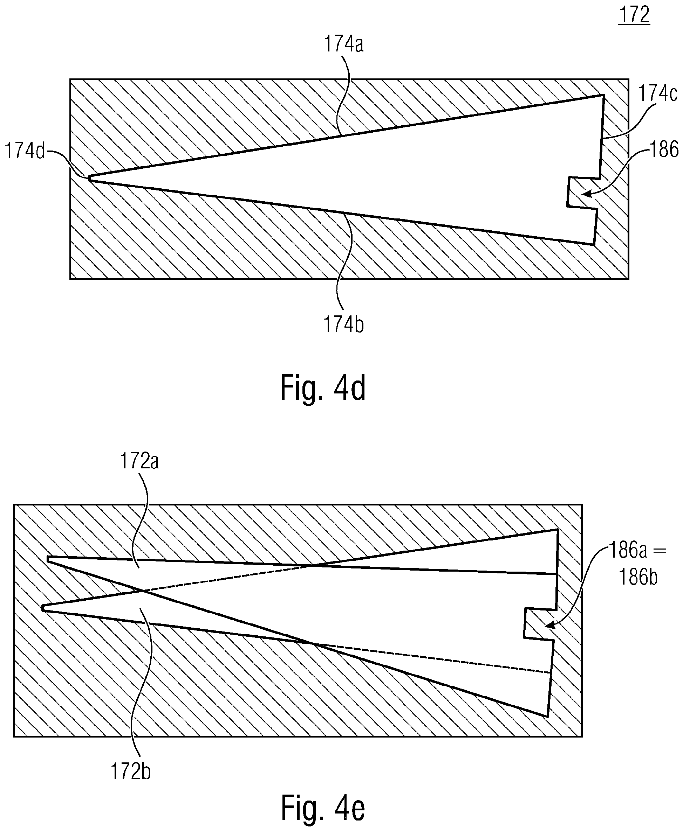

Fig. 4d zeigt eine schematische Seitenschnittansicht des Strahlumlenkelements 172, dessen Querschnitt als Freiformfläche gebildet ist, das bedeutet, nicht notwendigerweise einem einfachen Drei- oder Vierecks entsprechend. So kann die Seite 174c eine Aussparung 186 aufweisen, die eine Befestigung eines haltenden Elements ermöglicht, wobei die Aussparung 186 auch als hervorstehendes Element, etwa als Feder eines Nut-FederSystems gebildet sein kann. Der Querschnitt weist ferner eine vierte Seite 174d auf, die eine geringere Flächenausdehnung als die Hauptseiten 174a und 174b aufweist und selbige mit einander verbindet.

Fig. 4e zeigt eine schematische Seitenschnittansicht eines ersten Strahlumlenkelements 172a und eines in Darstellungsrichtung dahinterliegenden zweiten Strahlumlenkelements 172b. Die Aussparungen 186a und 186b können dabei so angeordnet sein, dass sie im Wesentlichen deckungsgleich sind, so dass eine Anordnung eines verbindenden Elements in den Aussparungen ermöglicht ist.

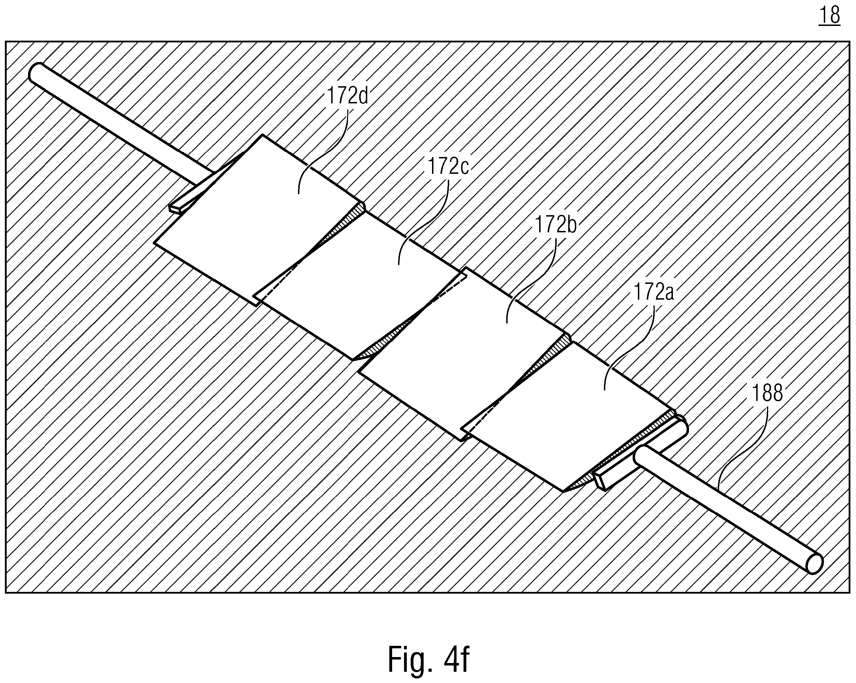

Fig. 4f zeigt eine schematische perspektivische Ansicht der Strahlumlenkeinrichtung 18, die bspw. vier Strahlumlenkelemente 172a-d umfasst, die mit einem verbindenden Element 188 verbunden sind. Das verbindende Element kann nutzbar sein, um von einem Aktor translatorisch und/oder rotatorisch bewegt zu werden. Das verbindende Element 188 kann einstückig ausgebildet sein und über eine Erstreckungsrichtung, etwa die y-Richtung, an oder in den Strahlumlenkelementen 172a-d verlaufen. Alternativ kann das verbindende Element 188 auch lediglich mit zumindest einer Seite der Strahlumlenkeinrichtung 18 verbunden sein, etwa wenn die Strahlumlenkelemente 172a-d einstückig gebildet sind. Alternativ kann eine Verbindung mit einem Aktor und/oder eine Verbindung der Strahlumlenkelemente 172a-d auch auf beliebige andere Weise erfolgen, etwa mittels Kleben, Ansprengen oder Löten. Die Strahlumlenkelemente 172a-d können mit einem geringen Abstand oder gar direkt aneinander anschließend gebildet sein, so dass keine oder möglichst geringe Lücken zwischen den Strahlumlenkelemente 172a-d implementiert sind.

Das bedeutet, die Strahlumlenkeinrichtung 18 kann als ein Array von nebeneinander angeordneten Facetten gebildet sein, wobei jeder optische Kanal einer der Facetten zugeordnet ist. Die Blendenstruktur kann sich über das Array von Facetten erstrecken.

Die Strahlumlenkeinrichtung kann eine erste und eine zweite reflektierende Hauptseite 174a und 174b aufweisen, wobei die Hauptseiten mit einem Winkel δ von 60° oder weniger gegeneinander geneigt sein können.

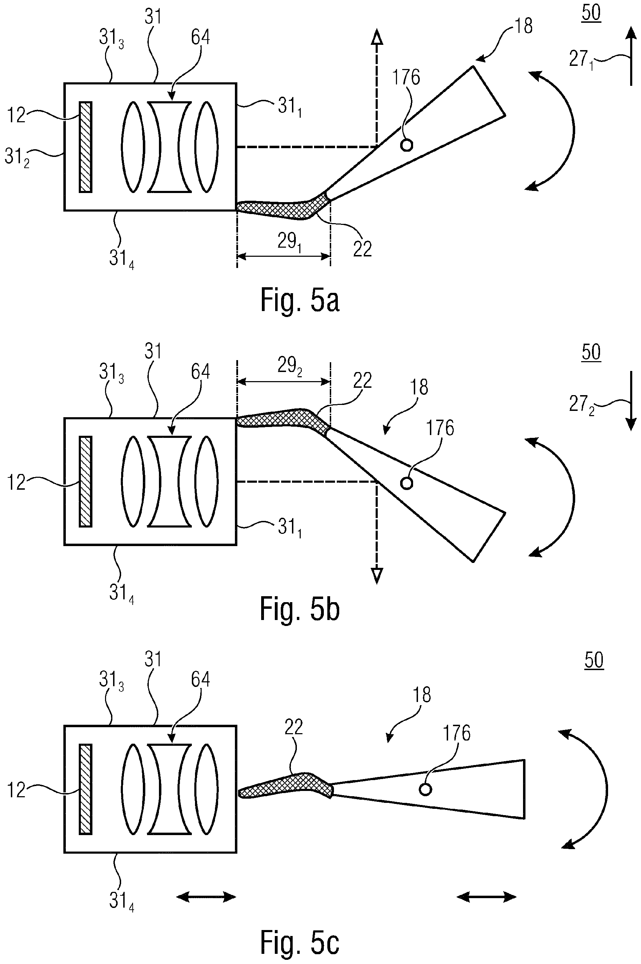

Anhand der Fig. 5a-5c wird nachfolgend eine Multiaperturabbildungsvorrichtung 50 erläutert, die die rotatorisch bewegliche Strahlumlenkeinrichtung 18 umfasst, die die keilförmigen Facetten gemäß den Fig. 4a-4f umfasst. Beispielhaft sind Optiken 64 des Arrays 14 jeweils als mehrteilige Linsenkombinationen gebildet. Die Multiaperturabbildungsvorrichtung 50 umfasst die Blendenstruktur 22, die beispielsweise an einer Verbindungskante zwischen den Hauptseiten 174a und 174b oder an der Nebenseite 174d mechanisch befestigt sei kann. Die Optiken 64 können in einem Gehäuse 31 angeordnet sein. Optional kann auch der Bildsensor 12 in dem Gehäuse 31 angeordnet sein. Obwohl sich nachfolgende Ausführungen auf ein Gehäuse beziehen, in dem die Optiken 64 angeordnet sind, gelten dieselben Ausführungen ohne Einschränkungen auch für ein Array von optischen Kanälen, das beispielsweise einen Träger aufweist, wie es für den Träger 47 beschrieben ist. An dem möglicherweise transparent gebildeten Träger 47 können die Optiken 64 unmittelbar oder mittelbar über Halterstrukturen angeordnet sein. Das Gehäuse 31 kann beispielsweise Hauptseiten 31₁ und 31₂ aufweisen, wobei die Hauptseite 31₁ dadurch gekennzeichnet ist, dass sie der Strahlumlenkeinrichtung 18 zugewandt angeordnet ist und eine der Strahlumlenkeinrichtung 18 benachbarte Seite des Gehäuses 31 bereitstellt. Wird beispielsweise die Fig. 1 betrachtet, so kann der Träger 47 ebenfalls eine Hauptseite aufweisen, die der Strahlumlenkeinrichtung 18 zugewandt angeordnet ist und eine Hauptseite aufweisen, die dem Bildsensor 12 zugewandt angeordnet ist. Nebenseiten 31₃ und 31₄ können die beiden Hauptseiten 31₁ und 31₂ miteinander verbinden. Zumindest die Hauptseite 31₁ des Gehäuses 31 kann auch als eine Hauptseite des Arrays verstanden werden.

In Fig. 5a ist nun die Multiaperturabbildungsvorrichtung 50 mit einer ersten Stellung der Strahlumlenkeinrichtung 18 dargestellt, in welcher die Blendenstruktur 22 den Spalt 29₁ verschließt.

In Fig. 5b ist die Multiaperturabbildungsvorrichtung 50 in der zweiten Stellung der Strahlumlenkeinrichtung 18 dargestellt, wobei die Blendenstruktur 22 den Spalt 29₂ verschließt. In der in Fig. 5a dargestellten ersten Stellung kann die Blendenstruktur möglichst weit außen, das bedeutet, benachbart zu der Nebenseite 31₄ mechanisch kontaktieren, das bedeutet, die Hauptseite 31₁ benachbart zu der Nebenseite 31₄ oder, wie es beispielsweise in Fig. 1 dargestellt ist, die Nebenseite 31₄. In Fig. 5b ist eine Situation dargestellt, in der die Blendenstruktur 22 das Gehäuse 31 bzw. das Array benachbart zu der Nebenseite 31₃ mechanisch kontaktiert.

In Fig. 5c ist die Multiaperturabbildungsvorrichtung 50 in einer optionalen Zwischenstellung zwischen der ersten Stellung und der zweiten Stellung dargestellt. In dieser dritten Stellung weist die Blendenstruktur 22 hin zu einem Bereich zwischen den Nebenseiten 31₃ und 31₄. Basierend auf der Darstellung gemäß den Fig. 5a und 5b kann die Blendenstruktur 22 elastisch oder flexibel gebildet sein und beispielsweise eine flexible Blende oder Dichtlippe bereitstellen. Hierfür kann die Blendenstruktur 22 elastische Materialien umfassen, etwa Silikon, Polyurethan oder andere Elastomere. Während des Umschaltens zwischen der ersten und zweiten Stellung kann die Blendenstruktur 22 über die Hauptseite 31₁ streichen. Wie es jedoch in Fig. 5c dargestellt ist, kann basierend auf einem veränderlichen Abstand zwischen der Strahlumlenkeinrichtung 18 und dem Array 14 bzw. dem Gehäuse 31 auch eine Situation erhalten werden, in der die Blendenstruktur 22 kontaktfrei zu dem Array 14 bzw. dem Gehäuse 31 ist. Hierfür kann die Multiaperturabbildungsvorrichtung 50 beispielsweise einen Aktuator umfassen, der ausgebildet ist, um die Strahlumlenkeinrichtung 18 und/oder das Array 14 translatorisch zu bewegen, um einen Abstand zwischen dem Array und der Strahlumlenkeinrichtung 18 zeitweise zu vergrößern. Das bedeutet, dass die Multiaperturabbildungsvorrichtung 50 ausgebildet sein kann, um während der Rotationsbewegung der Strahlumlenkeinrichtung eine translatorische Bewegung zwischen dem Array 14 und der Blendenstruktur 22 bereitzustellen, um zeitweise einen Abstand zwischen dem Array und der Blendenstruktur zu vergrößern.

In anderen Worten ist an einer Seite/Kante der Strahlumlenkeinrichtung der Multiaperturabbildungsvorrichtung mit linearer Kanalanordnung eine sich über alle Facetten des Spiegels und damit die gesamte Breite des Array-Objektivs erstreckende Blende bevorzugt aus einem flexiblen Material angeordnet. Diese ähnelt einer Dichtlippe. Die flexible Blende liegt in den zwei Nutzungszuständen, d. h. der ersten und der zweiten Stellung, entweder oberhalb oder unterhalb des Array-Objektivs an und verschließt die Lücke zwischen dem Array-Objektiv und der Strahlumlenkeinrichtung, so dass Falschlicht nicht bzw. in vermindertem Maße in die Kamera eindringen kann. Die flexible Blende kann in einem dritten Zustand, in dem die Kamera nicht benutzt wird, und in dem die Strahlumlenkeinrichtung in einer Zwischenstellung geparkt ist, weder oberhalb noch unterhalb des Array-Objektivs anliegen.

Fig. 6 zeigt eine schematische Seitenschnittansicht einer Multiaperturabbildungsvorrichtung 60 gemäß einem Ausführungsbeispiel. Verglichen mit der Multiaperturabbildungsvorrichtung 50 weist die Multiaperturabbildungsvorrichtung 60 einen optischen Bildstabilisator 34 auf, der ausgebildet ist, um eine Kraft auf das Array 14 bzw. das Gehäuse 31 und/oder die Strahlumlenkeinrichtung 18 auszuüben. Durch die erzeugte Kraft kann eine Relativbewegung zwischen dem Bildsensor 12, dem Array 14 und der Strahlumlenkeinrichtung 18 erhalten werden, etwa durch eine translatorische Verschiebung des Arrays 14 entlang einer oder beider der Bildachsen eines von dem Bildsensor 12 bereitgestellten Bilds. Alternativ oder zusätzlich kann eine translatorische Relativbewegung der Strahlumlenkeinrichtung 18, etwa entlang der y-Richtung und/oder eine Rotationsbewegung um die Achse 176 erzeugt werden, um eine optische Bildstabilisierung zu erhalten. Eine optische Bildstabilisierung kann vorteilhaft sein, wenn während eines Erfassungsvorgangs, während dem Teilgesichtsfelder oder das Gesamtgesichtsfeld erfasst werden, die Multiaperturabbildungsvorrichtung 60 gegenüber dem Objektbereich, dessen Gesichtsfeld erfasst wird, bewegt wird. Der optische Bildstabilisator 34 kann ausgebildet sein, um dieser Bewegung zumindest teilweise entgegenzuwirken, um ein Verwackeln des Bilds zu reduzieren oder zu verhindern. Für die optische Bildstabilisierung entlang einer ersten Bildachse 36, die beispielsweise parallel zu der Zeilenerstreckungsrichtung z angeordnet sein kann, kann der optische Bildstabilisator 34 ausgebildet sein, um eine erste Relativbewegung zwischen dem Bildsensor 12, dem Array 14 und der Strahlumlenkeinrichtung 18 zu erzeugen. Für die optische Bildstabilisierung entlang einer hierzu senkrecht angeordneten zweiten Bildachse 38 kann der optische Bildstabilisator 34 ausgebildet sein, um eine zweite Relativbewegung zwischen dem Bildsensor 12, dem Array 14 und der Strahlumlenkeinrichtung 18 zu erzeugen. Für die erste Relativbewegung kann der optische Bildstabilisator 34 ausgebildet sein, um das Array 14 bzw. den Bildsensor 12 entlang der Bildachse 36 translatorisch zu verschieben. Alternativ oder zusätzlich kann der optische Bildstabilisator 34 ausgebildet sein, um eine translatorische Bewegung der Strahlumlenkeinrichtung 18 entlang der Bildachse 36 zu erzeugen. Der optische Bildstabilisator 34 ist dabei so konfiguriert, dass er die Bewegungen der Komponenten so ausführt, dass zwischen dem Bildsensor 12, dem Array 14 und der Strahlumlenkeinrichtung 18 die entsprechende Relativbewegung entsteht. Die Relativbewegung kann parallel zu der Zeilenerstreckungsrichtung z und senkrecht zu den Strahlengängen ausführbar sein. Es kann jedoch vorteilhaft sein, das Array 14 gegenüber dem Bildsensor 12 in eine translatorische Bewegung zu versetzen, um beispielsweise eine elektronische Verschaltung des Bildsensors 12 gegenüber weiteren Komponenten mechanisch wenig oder nicht zu belasten.

Zum Erzeugen der zweiten Relativbewegung kann der optische Bildstabilisator 34 ausgebildet sein, um eine Rotationsbewegung der Strahlumlenkeinrichtung 18 zu erzeugen oder zu ermöglichen und/oder um eine translatorische Relativbewegung zwischen dem Bildsensor 12 und dem Array 14 entlang der Bildachse 38 und/oder eine translatorische Relativbewegung zwischen dem Array 14 und der Strahlumlenkeinrichtung 18 bereitzustellen, wobei hierfür entsprechende Aktuatoren angeordnet sein können. Für die Erzeugung der Rotationsbewegung, etwa parallel zu der Rotationsbewegung 38 oder als Teil hiervon kann der optische Bildstabilisator 34 beispielsweise einen Aktor umfassen, der ausgebildet ist, um die Rotationsbewegung 38 zu erzeugen. Obwohl für den Erhalt der optischen Bildstabilisierung eine Ausgestaltung des optischen Bildstabilisators 34 derart, dass er die erste und zweite Relativbewegung als translatorische Relativbewegung steuert, möglich ist, kann eine Ausgestaltung der zweiten Relativbewegung als Rotationsbewegung 38 vorteilhaft sein, da in diesem Fall eine translatorische Bewegung von Komponenten entlang der zweiten Bildachse 38 vermieden werden kann. Diese Richtung kann parallel zu einer Dickenrichtung der Multiaperturabbildungsvorrichtung 60 liegen, die gemäß manchen Ausführungen möglichst gering gehalten werden soll. Durch die Rotationsbewegung kann ein derartiges Ziel erreicht werden.

Wird nun Fig. 6 betrachtet und die Rotationsbewegung 38 und/oder eine translatorische Bewegung des Arrays 14 entlang der z-Richtung betrachtet, die durch den optischen Bildstabilisator 34 ausgelöst werden können, so kann basierend auf der Elastizität der Blendenstruktur 22 bzw. der Steifigkeit der Blendenstruktur sowie dem mechanischen Kontakt zwischen der Blendenstruktur 22 und dem Array 14 bzw. der Strahlumlenkeinrichtung 18 eine rückstellende Kraft erhalten werden, wenn die jeweilige Relativbewegung durch den optischen Bildstabilisator 34 erzeugt wird, da basierend auf der Relativbewegung eine Verformung der Blendenstruktur 22 erfolgt. Alternativ oder zusätzlich kann eine derartige rückstellende Kraft auch zumindest teilwiese durch eigene separate Federstrukturen erhalten werden, beispielsweise elastische Verbindungselemente. Die rückstellende Kraft kann konfiguriert sein, um zumindest 30%, zumindest 20% oder zumindest 10% einer maximalen Relativbewegung, d. h. einer maximalen Auslenkung im Zuge der Relativbewegung durch den optischen Bildstabilisator 34, zurückzustellen, wenn die Kraft des optischen Bildstabilisators 34 zurückgenommen wird.

In anderen Worten kann die flexible Blende 22 selbst bzw. zusätzlich ein- oder angebrachte Elemente als Federelemente für die Strahlumlenkeinrichtung dienen und damit beispielsweise bei Nutzung der letzteren zur optischen Bildstabilisierung eine rückstellende Wirkung haben.

Fig. 7 zeigt eine schematische perspektivische Ansicht einer Multiaperturabbildungsvorrichtung 70 gemäß einem Ausführungsbeispiel, die transparente Strukturen 42a und 42b aufweist, die entlang der Blickrichtungen 27₁ und 27₂ ausgehend von der Strahlumlenkeinrichtung 18 angeordnet sind. Die transparenten Strukturen 42a und 42b können ausgebildet sein, um einen Eintritt von Schmutz oder Partikeln hin zu dem Gehäuse 31, der Strahlumlenkeinrichtung 18 oder weiteren Komponenten zu verhindern. Alternativ oder zusätzlich kann auch eine Berührung der Strahlumlenkeinrichtung 18, etwa durch einen Finger eines Benutzers oder dergleichen, verhindert oder erschwert werden. Die Multiaperturabbildungsvorrichtung 70 weist beispielsweise zwei Blickrichtungen und zwei transparente Strukturen 42a und 42b auf, wobei jede der transparenten Strukturen 42a und 42b mit jeweils einer der Blickrichtungen 27₁ bzw. 27₂ assoziiert sein kann. Wird beispielsweise die Multiaperturabbildungsvorrichtung 10 betrachtet, die gebildet sein kann, um lediglich eine Blickrichtung aufzuweisen, so kann die Multiaperturabbildungsvorrichtung auch mit lediglich einer transparenten Struktur 42 ausgeführt sein.

Die transparenten Strukturen 42a können beispielsweise ein Glasmaterial und/oder ein Polymermaterial umfassen und für die von der Multiaperturabbildungsvorrichtung 70 zu erfassende elektromagnetische Strahlung im Wesentlichen transparent gebildet sein, wobei ebenfalls vorstellbar ist, dass Filter in die transparente Struktur mit eingebracht sind. Die transparenten Strukturen 42a und/oder 42b können eine Oberflächenrauigkeit aufweisen, die gering ist, das bedeutet, die transparenten Strukturen 42a und/oder 42b können glatt ausgeführt sein.

Ein beispielhafter, jedoch nicht einschränkender Wert einer Rauheit Rₐ für die transparenten Strukturen 42a und/oder 42b kann beispielsweise höchstens 0,03 µm, höchstens 0,005 µm oder höchstens 0,0005 µm betragen. Die Blendenstruktur 22 kann eine Rauheit aufweisen, deren Rauheitswert vergleichsweise größer ist als die Rauheit der transparenten Strukturen 42a und/oder 42b, Dies ermöglicht eine Erschwerung oder gar Vermeidung einer Anhaftung der Blendenstruktur 22 an einer transparenten Struktur 42a und/oder 42b bei einem mechanischen Kontakt zwischen denselben. Das bedeutet, alternativ zu dem mechanischen Kontakt mit dem Array 14 kann die Blendenstruktur 22 mit der transparenten Struktur 42a und/oder 42b in mechanischem Kontakt stehen, etwa zeitlich wechselweise. Die Blendenstruktur kann in der ersten Stellung und in der zweiten Stellung in mechanischem Kontakt mit einerseits dem Array 14 oder einer der transparenten Strukturen 42a und 42b und andererseits mit der Strahlumlenkeinrichtung 18.

In anderen Worten kann die flexible Blende 22 über eine raue Oberfläche verfügen, so dass die Blende an glatten Oberflächen wie etwa Deckgläsern 42a und/oder 42b nicht haften bleiben und/oder bereits bei geringen Kräften, die durch die Strahlumlenkeinrichtung aufgebracht werden kann, von der Oberfläche gelöst werden kann. Das bedeutet, selbst bei einem Erfolgen eines Anhaftens kann durch die Rotationsbewegung ein leichtes Ablösen der Blendenstruktur 22 von den transparenten Strukturen 42a und/oder 42b erhalten werden.

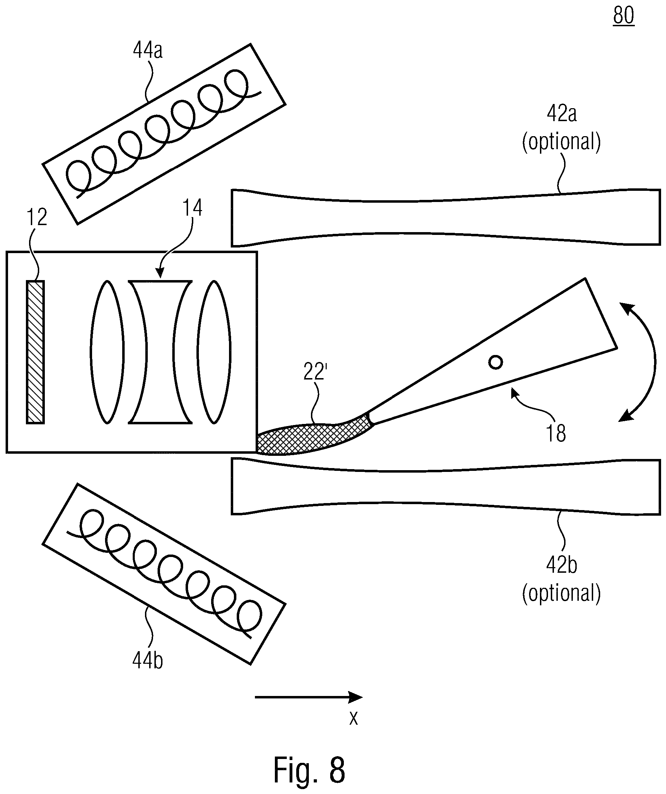

Fig. 8 zeigt eine schematische Seitenschnittansicht einer Multiaperturabbildungsvorrichtung 80, die optional die transparenten Strukturen 42a und 42b umfassen kann, ohne weiteres jedoch auch ohne dieselben ausführbar ist. Die Multiaperturabbildungsvorrichtung 80 umfasst eine Blendenstruktur 22', die ähnlich der Blendenstruktur 22 gebildet sein kann, jedoch zusätzlich ein magnetisches oder magnetisierbares Material umfassen kann, etwa ferromagnetische oder paramagnetische Materialien. Diese Materialien können beispielsweise als Partikel, Späne, Sägespäne oder Schleifspäne in das Material der Blendenstruktur 22 eingebracht sein. Das bedeutet, dass die Blendenstruktur 22' magnetische Materialien umfassen kann. Benachbart zu dem Gehäuse 31 und/oder die transparenten Strukturen 42a und/oder 42b und mithin benachbart zu der Blendenstruktur 22 kann ein Magnetfeld-bereitstellendes Element 44a und/oder 44b angeordnet sein, das bedeutet, eine Magnetfeldquelle. Bei den Magnetfeld-bereitstellenden Elementen 44a und/oder 44b kann es sich bevorzugt um Elemente handeln, die in einem zeitlichen Wechsel ein vergleichsweise starkes und ein vergleichsweise schwaches bzw. kein Magnetfeld bereitstellen. Beispielsweise kann es sich bei den Magnetfeldquellen 44a und 44b um Elektromagneten handeln. Alternativ oder zusätzlich ist ebenfalls vorstellbar, dass die Magnetfeldquellen beispielsweise Permanentmagnete umfassen und mit einem veränderlichen Abstand zu der Blendenstruktur 22' angeordnet sind, um bei einem geringen Abstand ein vergleichsweise großes Magnetfeld und bei einem hohen Abstand ein vergleichsweises niedriges Magnetfeld bereitzustellen.

Magnetfelder der Magnetfeldquellen 44a und 44b können so ausgestaltet sein, dass basierend auf dem Magnetfeld eine anziehende Kraft auf die Blendenstruktur 22' ausgeübt wird, so dass die anziehende Kraft die Rotationsbewegung der Strahlumlenkeinrichtung 18 ausführt oder zumindest unterstützt. Alternativ oder zusätzlich ist es ebenfalls vorstellbar, dass nach der Rotationsbewegung der Strahlumlenkeinrichtung 18 ein eventuell im Blickfeld des Arrays 14 verbleibender Teil der Blendenstruktur 22' durch die anziehende Kraft aus diesem Blickfeld herausbewegt wird, das bedeutet, herausgezogen wird.

In anderen Worten können oberhalb und unterhalb des Array-Objektivs aus einer Spule und gegebenenfalls einem zusätzlichen Kern Elektromagnete gebildet sein, die die flexible Blende zusätzlich zur Drehbewegung der Strahlumlenkeinrichtung 18 anziehen, so dass die Blende eine noch verbesserte lichtabdichtende Wirkung aufweist.

Die vorangehend beschriebene Anordnung einer Blendenstruktur ermöglicht eine Verbesserung der Falschlichtunterdrückung in Multiaperturabbildungsvorrichtungen. Derartige Multiaperturabbildungsvorrichtungen und/oder Multiaperturabbildungssysteme können Anwendung finden in Konzepten mit linearer Kanalanordnung und kleinster Baugröße.

Gemäß Ausführungsbeispielen kann eine Fokussiereinrichtung vorgesehen sein, die ausgebildet ist, um kanalindividuell, für zwei oder mehrere, ggf. alle optischen Kanäle gemeinsam, einen Fokus der Multiaperturabbildungsvorrichtung 80 oder einer anderen hierein beschriebenen Multiaperturabbildungsvorrichtung, etwa die Multiaperturabbildungsvorrichtung 10, 20, 30, 40, 50, 60 oder 70 zu verändern. Hierfür kann ein Aktuator verwendet werden, um bspw. ein Abstand zwischen dem Array 14 und dem Bildsensor 12 zu verändern. Dies kann zu einem veränderlichen Abstand zwischen dem Array 14 und der Strahlumlenkeinrichtung 18 führen, etwa wenn die Optik des optischen Kanals, d. h., das Objektiv, axial bewegt wird. Durch eine flexible oder elastische Blende kann der Spalt zwischen dem Array 14 und der Strahlumlenkeinrichtung 18 geschlossen bleiben, etwa wenn eine axiale Ausdehnung der Blendenstruktur 22' entlang der x-Richtung größer oder gleich ist wie ein maximaler Abstand zwischen dem Array 14 und der Strahlumlenkeinrichtung 18. Bei einem Verringerung des Abstands und/oder einer darauffolgenden Vergrößerung desselben kann eine Stauchung/Verlängerung oder Verformung der Blendenstruktur 22' den Spalt verschlossen halten.

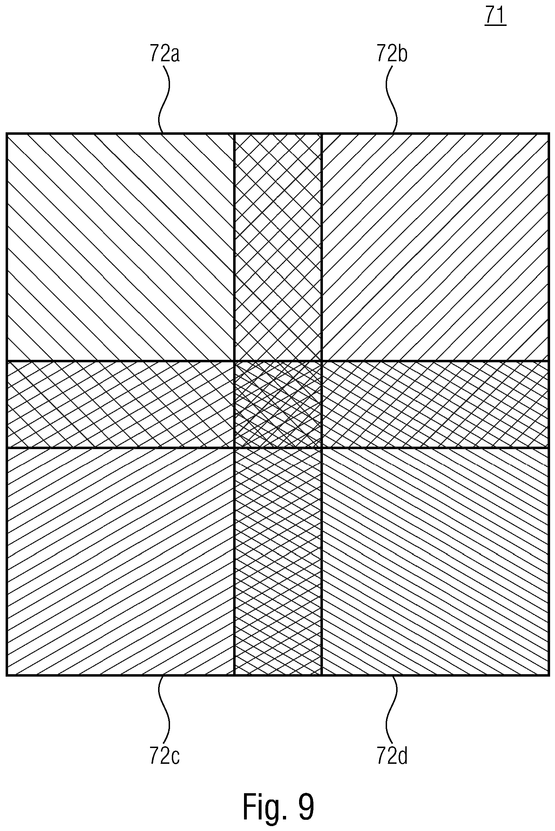

Fig. 9 zeigt eine schematische Darstellung eines Gesamtgesichtsfelds 71, wie es beispielsweise mit einer vorangehend beschriebenen Multiaperturabbildungsvorrichtung erfassbar ist, etwa der Multiaperturabbildungsvorrichtung 10, 20, 30, 40, 50, 60, 70 oder 80. Obwohl die hierin beschriebenen Multiaperturabbildungsvorrichtungen so beschrieben sind, dass sie beispielhaft vier optische Kanäle zur Erfassung von vier Teilgesichtsfeldern 72a-72d des Gesamtgesichtsfelds aufweisen, so sei darauf hingewiesen, dass die hierin beschriebenen Multiaperturabbildungsvorrichtungen auch mit einer anderen Anzahl optischer Kanäle gebildet sein können, etwa mit einer Anzahl von zumindest 2, zumindest 3, zumindest 4, zumindest 10, zumindest 20 oder ein noch höherer Wert. Es sei ferner darauf hingewiesen, dass es vorstellbar ist, dass einige der Teilgesichtsfelder 72a-72d mit einer Anzahl von mehr als einem optischen Kanal erfasst werden. Die Strahlengänge der optischen Kanäle der Multiaperturabbildungsvorrichtungen können auf voneinander verschiedene Teilgesichtsfelder 72a-d lenkbar sein, wobei jedem optischen Kanal ein Teilgesichtsfeld 72a-d zugeordnet werden kann. Beispielsweise überlappen die Teilgesichtsfelder 72a-d miteinander, um eine Aneinanderfügung einzelner Teilbilder zu einem Gesamtbild zu ermöglichen. Weist die Multiaperturabbildungsvorrichtung eine von 4 verschiedene Anzahl von optischen Kanälen auf, kann das Gesamtgesichtsfeld 71 eine von 4 verschiedene Anzahl von Teilgesichtsfeldern aufweisen. Alternativ oder zusätzlich kann zumindest ein Teilgesichtsfeld 72a-d von einem zweiten oder einer höheren Anzahl von optischen Kanälen mit einer höheren Anzahl von Modulen (Multiaperturabbildungsvorrichtungen) erfasst werden, um Stereo-, Trio-, Quattro-Kameras oder höherwertigere Kameras zu bilden. Die einzelnen Module können um Bruchteile eines Pixels verschoben sein, und ausgebildet sein, um Verfahren der Superresolution zu implementieren. Eine Anzahl von optischen Kanälen und/oder eine Anzahl von Multiaperturabbildungsvorrichtungen und/oder eine Anzahl von Teilgesichtsfeldern ist/sind beispielsweise beliebig.

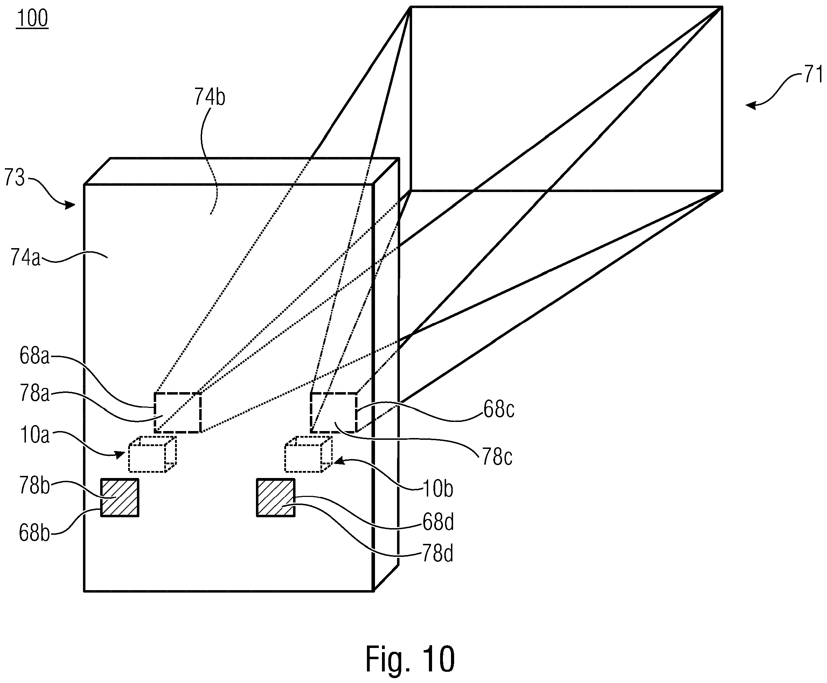

Fig. 10 zeigt eine schematische perspektivische Ansicht eines Abbildungssystems 100, das ein Gehäuse 73 und eine erste Multiaperturabbildungsvorrichtung 10a und eine zweite Multiaperturabbildungsvorrichtung 10b aufweist, die in dem Gehäuse 73 angeordnet sind. Das Abbildungssystem 100 ist ausgebildet, um das Gesamtgesichtsfeld 71 zumindest teilweise, etwa im Überlappbereich der Erfassungsbereiche der Multiaperturabbildungsvorrichtungen 10a und 10b, stereoskopisch mit den Multiaperturabbildungsvorrichtungen 10a und 10b zu erfassen. Der Überlappbereich kann einen Teil des Gesamtgesichtsfelds 71 bilden, kann aber auch das Gesamtgesichtsfeld 71 nahezu vollständig oder vollständig abdecken, d. h., zu einem Anteil von zumindest 95%, zumindest 97% oder zumindest 99%. Das Gesamtgesichtsfeld 71 ist beispielsweise an einer, einer Hauptseite 74a abgewandten, Hauptseite 74b des Gehäuses 73 angeordnet. Beispielsweise können die Multiaperturabbildungsvorrichtungen 10a und 10b das Gesamtgesichtsfeld 71 durch transparente Bereiche 68a bzw. 68c erfassen, wobei in der Hauptseite 74b angeordnete Blenden 78a und 78c zumindest teilweise transparent sind. In der Hauptseite 74a angeordnete Blenden 78b und 78d können transparente Bereiche 78b bzw. 78d umfassen, die zumindest teilweise die transparenten Bereiche 68b und 68d optisch verschließen, so dass ein Umfang von Falschlicht aus einer der Hauptseite 74a zugewandten Seite, das die Aufnahmen der Multiaperturabbildungsvorrichtungen 10a und/oder 10b verfälschen kann, zumindest reduziert ist.

Obwohl die Multiaperturabbildungsvorrichtungen 10a und 10b räumlich voneinander beabstandet angeordnet dargestellt sind, können die Multiaperturabbildungsvorrichtungen 10a und 10b auch räumlich benachbart oder kombiniert angeordnet sein. Beispielsweise können die Arrays der Abbildungsvorrichtungen 10a und 10b nebeneinander oder parallel zueinander angeordnet sein. Die Arrays können einzeilig gebildet sein und können zueinander angeordnete Zeilen bilden, wobei jede Multiaperturabbildungsvorrichtung 10a und 10b ein einzeiliges Array aufweist. Die Multiaperturabbildungsvorrichtungen 10a und 10b können eine gemeinsame Strahlumlenkeinrichtung und/oder einen gemeinsamen Träger 47 und/oder einen gemeinsamen Bildsensor 12 aufweisen. Alternativ oder zusätzlich zu der Multiaperturabbildungsvorrichtung 10a und/oder 10b kann zumindest die Multiaperturabbildungsvorrichtung 20, 30, 40, 50, 60, 70 und/oder 80 angeordnet sein und/oder eine weitere Multiaperturabbildungsvorrichtung 10. Die oben beschriebenen gemeinsamen Elemente, etwa die Strahlumlenkeinrichtung 18 oder das Array 14 können von einem gemeinsamen optischen Bildstabilisator genutzt werden, da beispielsweise eine Bewegung der Strahlumlenkeinrichtung für optische Kanäle mehrerer Module gemeinsam wirken kann, was eine gemeinsame optische Bildstabilisierung ermöglicht. Dementsprechend kann auch der optische Bildstabilisator für mehrere Module gemeinsam ausgeführt sein und/oder ein gemeinsamer Referenzkanal für mehrere Module benutzt werden.

Die transparenten Bereiche 68a-d können zusätzlich mit einer schaltbaren Blende 78a-d ausgestattet sein, die den optischen Aufbau für den Fall der Nicht-Benutzung abdeckt. Die Blenden 78a-d können ein mechanisch bewegtes Teil umfassen. Die Bewegung des mechanisch bewegten Teils kann unter Nutzung eines Aktors erfolgen, wie es beispielsweise auch für andere Bewegungen vorgesehen sein kann. Die Blenden 78a-d können alternativ oder zusätzlich elektrisch steuerbar sein und eine elektrochrome Schicht oder eine elektrochrome Schichtfolge umfassen, d. h., als elektrochrome Blende gebildet sein.

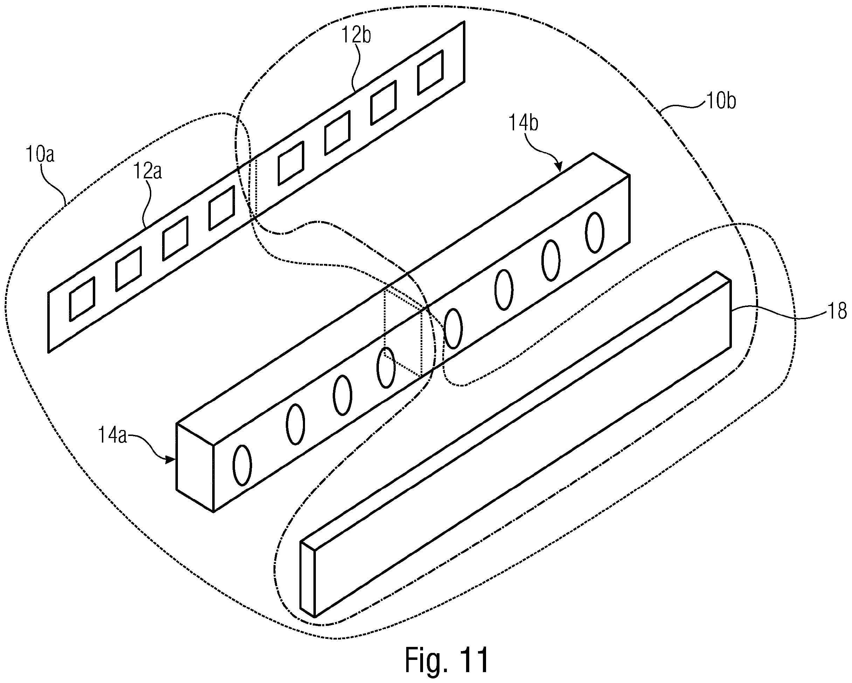

Fig. 11 zeigt einen schematischen Aufbau umfassend eine erste Multiaperturabbildungsvorrichtung 10a und eine zweite Multiaperturabbildungsvorrichtung 10b, wie er beispielsweise in dem Abbildungssystem 100 angeordnet sein kann. Die Arrays 14a und 14b können einzeilig gebildet sein und können eine gemeinsame Zeile bilden. Die Bildsensoren 12a und 12b können auf einem gemeinsamen Substrat bzw. auf einem gemeinsamen Schaltungsträger, wie einer gemeinsamen Platine oder einem gemeinsamen Flexboard markiert sein. Alternativ können die Bildsensoren 12a und 12b auch voneinander verschiedene Substrate umfassen. Verschiedene Mischungen dieser Alternativen sind natürlich ebenfalls möglich, wie etwa Multiaperturabbildungsvorrichtungen umfassend einen gemeinsamen Bildsensor, ein gemeinsames Array und/oder eine gemeinsame Strahlumlenkeinrichtung 18 sowie weitere Multiaperturabbildungsvorrichtungen, die separate Komponenten aufweisen. Vorteilhaft an einem gemeinsamen Bildsensor, einem gemeinsamen Array und/oder einer gemeinsamen Strahlumlenkeinrichtung ist, dass eine Bewegung der jeweiligen Komponenten mit einer großen Präzision durch Ansteuern einer geringen Menge von Aktuatoren erhalten werden kann und eine Synchronisierung zwischen Aktoren reduziert oder vermieden werden kann. Ferner kann eine hohe thermische Stabilität erhalten werden. Alternativ oder zusätzlich können auch andere und/oder voneinander verschieden Multiaperturabbildungsvorrichtungen ein gemeinsames Array, einen gemeinsamen Bildsensor und/oder eine gemeinsame Strahlumlenkeinrichtung aufweisen.

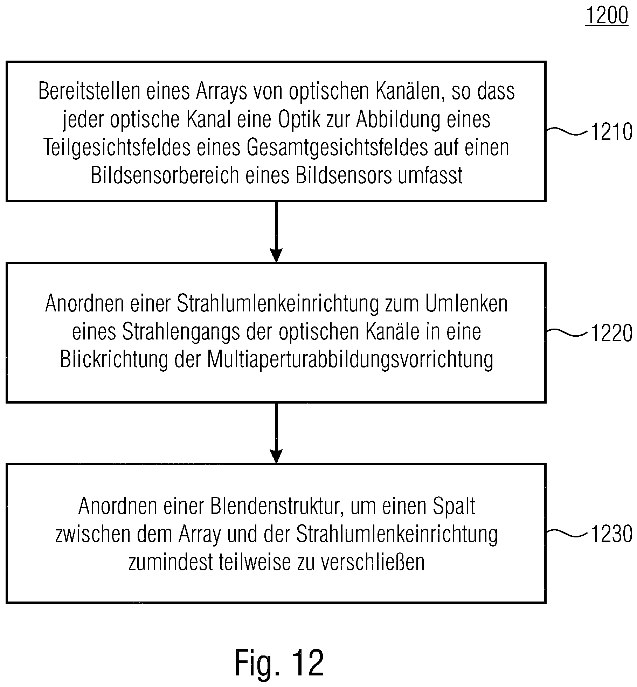

Fig. 12 zeigt ein schematisches Flussdiagramm eines Verfahrens 1200 zum Bereitstellen einer Multiaperturabbildungsvorrichtung, etwa der Multiaperturabbildungsvorrichtung 10.

Das Verfahren 1200 umfasst einen Schritt 1210, in welchem ein Bereitstellen eines Arrays von optischen Kanälen erfolgt, so dass jeder optische Kanal eine Optik zur Abbildung eines Teilgesichtsfelds eines Gesamtgesichtsfelds auf einen Bildsensorbereich eines Bildsensors umfasst. In einem Schritt 1220 erfolgt ein Anordnen einer Strahlumlenkeinrichtung zum Umlenken eines Strahlengangs der optischen Kanäle in eine Blickrichtung der Multiaperturabbildungsvorrichtung. In einem Schritt 1230 erfolgt ein Anordnen einer Blendenstruktur, um einen Spalt zwischen dem Array und der Strahlumlenkeinrichtung zumindest teilweise zu verschließen.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Multiaperturabbildungsvorrichtung mit:
einem Array (14) von optischen Kanälen (16a-h), wobei jeder optische Kanal (16a-h) eine Optik (64a-h) zur Abbildung eines Teilgesichtsfelds (72a-d) eines Gesamtgesichtsfelds (71) auf einen Bildsensorbereich (24a-h) eines Bildsensors (12) umfasst;
einer Strahlumlenkeinrichtung (18) zum Umlenken eines Strahlengangs (26a-h) der optischen Kanäle (16a-h) in eine Blickrichtung (27₁ bzw. 27₂) der Multiaperturabbildungsvorrichtung; und
einer Blendenstruktur (22; 22'), die angeordnet ist, um einen Spalt (29₁, 29₂) zwischen dem Array (14) und der Strahlumlenkeinrichtung (18) zumindest teilweise zu verschließen;
wobei das Array (14) mit einem Abstand zu der Strahlumlenkeinrichtung (18) angeordnet einen Träger (47) zum Haltern der Optiken (64a-h), ein Gehäuse (31) des Arrays (14) oder eine transparente Struktur (42a, 42b), die ausgebildet ist, um einen Eintritt von Partikeln zu der Strahlumlenkeinrichtung (18) zumindest teilweise zu reduzieren, aufweist, wobei der Abstand den Spalt (29₁, 29₂) bildet; und
wobei die Blendenstruktur (22; 22') den Spalt durch mechanischen Kontakt mit dem Träger (47), dem Gehäuse (31) oder der transparenten Struktur (42a, 42b) einerseits und der Strahlumlenkeinrichtung (18) andererseits verschließt.

2. Multiaperturabbildungsvorrichtung gemäß Anspruch 1, bei der eine Abmessung des Spalts (29₁, 29₂) veränderlich ist, indem die Strahlumilenkeinrichtung (18) zum Umschalten zwischen einer ersten und einer zweiten rotatorischen Stellung angesteuert wird.

3. Multiaperturabbildungsvorrichtung gemäß Anspruch 1 oder 2, bei der die optischen Kanäle zwischen dem Array (14) und der Strahlumlenkeinrichtung an dem Spalt (29₁, 29₂) und der Blendenstruktur (22, 22') vorbei laufen.

4. Multiaperturabbildungsvorrichtung gemäß einem der vorangehenden Ansprüche, bei der jedem Teilgesichtsfeld (72-d) eine Richtung zugeordnet ist, in die ein Strahlengang (26a-h) eines optischen Kanals (16a-h) mit der Strahlumlenkeinrichtung (18) umgelenkt wird, wobei die Blendenstruktur (22; 22') ausgebildet ist, um einen Eintritt von Licht aus einer Richtung, die von den den Teilgesichtsfeldern zugeordneten Richtungen entlang der Blickrichtung (27_{1,} 27₂) verschieden ist, zumindest teilweise zu reduzieren.

5. Multiaperturabbildungsvorrichtung gemäß einem der vorangehenden Ansprüche, bei der die Blendenstruktur (22; 22') entlang einer Richtung angeordnet ist, entlang der die Strahlengänge (26a-h) der optischen Kanäle (16a-h) zwischen dem Array (14) und der Stahlumlenkeinrichtung (18) verlaufen.

6. Multiaperturabbildungsvorrichtung gemäß einem der vorangehenden Ansprüche, bei der die Strahlumlenkeinrichtung (18) ausgebildet ist, um in einer ersten Stellung die Strahlengänge (26a-h) in eine erste Blickrichtung (27₁) zu lenken und, um in einer zweiten Stellung die Strahlengänge (26a-h) in eine zweite Blickrichtung (27₂) umzulenken, wobei die Strahlumlenkeinrichtung (18) rotatorisch beweglich gelagert ist, und zwischen der ersten Stellung und der zweiten Stellung rotatorisch bewegbar ist.

7. Multiaperturabbildungsvorrichtung gemäß Anspruch 6, bei der die Blendenstruktur (22; 22') in der ersten Stellung und in der zweiten Stellung in mechanischem Kontakt mit einerseits dem Array (14) oder einer transparenten Struktur (42a, 42b), die ausgebildet ist, um einen Eintritt von Partikeln zu der Strahlumlenkeinrichtung (18) zumindest teilweise zu reduzieren, und andererseits der Strahlumlenkeinrichtung (18) steht.

8. Multiaperturabbildungsvorrichtung gemäß einem der vorangehenden Ansprüche, bei der die Blendenstruktur (22') ein magnetisches Material umfasst und bei der benachbart zu der Blendenstruktur (22') ein Magnetfeld-bereitstellendes Element (44a, 44b) angeordnet ist und ausgebildet ist, um die Blendenstruktur (22') anzuziehen.

9. Multiaperturabbildungsvorrichtung gemäß einem der vorangehenden Ansprüche, bei der entlang einer Richtung, entlang der die Strahlengänge umgelenkt werden, eine transparente Struktur (42a, 42b) angeordnet ist und ausgebildet ist, um einen Eintritt von Partikeln zu der Strahlumlenkeinrichtung (18) zumindest teilweise zu reduzieren, wobei eine Oberflächenrauigkeit der Blendenstruktur (22; 22') größer ist als eine Oberflächenrauigkeit der transparenten Struktur (42a, 42b).

10. Multiaperturabbildungsvorrichtung gemäß einem der vorangehenden Ansprüche, bei der die Blendenstruktur (22; 22') elastisch gebildet ist.

11. Multiaperturabbildungsvorrichtung gemäß einem der vorangehenden Ansprüche, bei der die Strahlumlenkeinrichtung (18) eine erste reflektierende Hauptseite (174a) und eine zweite reflektierende Hauptseite (174b) aufweist, wobei die erste und zweite reflektierende Hauptseite (174a, 174b) mit einem Winkel (δ) von höchstens 60° gegeneinander geneigt sind.

12. Multiaperturabbildungsvorrichtung gemäß einem der vorangehenden Ansprüche, bei der das Array (14) einen transparenten Träger (47) aufweist, durch den die optischen Kanäle (16a-h) verlaufen, und an dem die Optiken (64a-h) befestigt sind.

13. Multiaperturabbildungsvorrichtung gemäß einem der vorangehenden Ansprüche mit einer Fokussiereinrichtung zum Einstellen eines Fokus der Multiaperturabbildungsvorrichtung, durch Verändern eines Abstands zwischen dem Array (14) und der Strahlumlenkeinrichtung (18).

14. Abbildungssystem mit einem ersten Modul umfassend eine Multiaperturabbildungsvorrichtung gemäß einem der Patentansprüche 1 bis 13 und einem zweiten Modul umfassend eine Multiaperturabbildungsvorrichtung gemäß einem der Patentansprüche 1 bis 13, wobei das erste und das zweite Modul ausgebildet sind, um das Gesamtgesichtsfeld (71) zumindest stereoskop zu erfassen.

15. Verfahren (1200) zum Bereitstellen einer Multiaperturabbildungsvorrichtung mit folgenden Schritten:
Bereitstellen (1210) eines Arrays (14) von optischen Kanälen, so dass jeder optische Kanal eine Optik zur Abbildung eines Teilgesichtsfelds eines Gesamtgesichtsfelds auf einen Bildsensorbereich eines Bildsensors umfasst;
Anordnen (1220) einer Strahlumlenkeinrichtung zum Umlenken eines Strahlengangs der optischen Kanäle in eine Blickrichtung der Multiaperturabbildungsvorrichtung; und
Anordnen (1230) einer Blendenstruktur, um einen Spalt zwischen dem Array und der Strahlumlenkeinrichtung zumindest teilweise zu verschließen;
so dass das Array (14) mit einem Abstand zu der Strahlumlenkeinrichtung (18) angeordnet einen Träger (47) zum Haltern der Optiken (64a-h), ein Gehäuse (31) des Arrays (14) oder eine transparente Struktur (42a, 42b), die ausgebildet ist, um einen Eintritt von Partikeln zu der Strahlumlenkeinrichtung (18) zumindest teilweise zu reduzieren, aufweist, wobei der Abstand den Spalt (29₁, 29₂) bildet; und
so dass die Blendenstruktur (22; 22') den Spalt durch mechanischen Kontakt mit dem Träger (47), dem Gehäuse (31) oder der transparenten Struktur (42a, 42b) einerseits und der Strahlumlenkeinrichtung (18) andererseits verschließt.

## Claims

1. A multi-aperture imaging device comprising:
an array (14) of optical channels (16a-h), wherein each optical channel (16a-h) comprises optics (64a-h) for imaging a partial field of view (72a-d) of a total field of view (71) onto an image sensor region (24a-h) of an image sensor (12);
beam-deflecting means (18) for deflecting an optical path (26a-h) of the optical channels (16a-h) to a viewing direction (27₁ or 27₂) of the multi-aperture imaging device; and
a diaphragm structure (22; 22') arranged to at least partly close a gap (29₁, 29₂) between the array (14) and the beam-deflecting means (18);
wherein the array (14) comprises, arranged at a distance to the beam-deflecting means (18), a carrier (47) for holding the optics (64a-h), a housing (31) of the array (14) or a transparent structure (42a, 42b) configured to at least partly reduce the entrance of particles to the beam-deflecting means (18), the distance forming the gap (29₁, 29₂); and
wherein the diaphragm structure (22; 22') closes the gap by mechanical contact with the carrier (47), the housing (31) or the transparent structure (42a, 42b) on the one hand and the beam-deflecting means (18) on the other hand.

2. The multi-aperture imaging device in accordance with claim 1, wherein a dimension of the gap (29₁, 29₂) can be changed by driving the beam-deflecting means (18) to switch between a first and a second rotational position.

3. The multi-aperture imaging device in accordance with claim 1 or 2, wherein the optical channels between the array (14) and the beam-deflecting means pass along the gap (29₁, 29₂) and the diaphragm structure (22, 22').

4. The multi-aperture imaging device in accordance with any of the preceding claims, wherein a direction which an optical path (26a-h) of an optical channel (16a-h) is deflected to by the beam-deflecting means (18) is associated to each partial field of view (72a-d), the diaphragm structure (22; 22') being configured to at least partly reduce the entrance of light from a direction which is different from the directions associated to the partial fields of view along the viewing direction (27₁, 27₂).

5. The multi-aperture imaging device in accordance with any of the preceding claims, wherein the diaphragm structure (22; 22') is arranged along a direction along which the optical paths (26a-h) of the optical channels (16a-h) pass between the array (14) and the beam-deflecting means (18).

6. The multi-aperture imaging device in accordance with any of the preceding claims, wherein the beam-deflecting means (18) is configured to, in a first position, direct the optical paths (26a-h) to a first viewing direction (27₁) and to deflect, in a second position, the optical paths (26a-h) to a second viewing direction (27₂), wherein the beam-deflecting means (18) is supported to be rotationally movable and is movable in a rotational manner between the first position and the second position.

7. The multi-aperture imaging device in accordance with claim 6, wherein the diaphragm structure (22; 22'), in the first position and in the second position, is in mechanical contact with the array (14) or a transparent structure (42a, 42b) configured to at least partly reduce the entrance of particles to the beam-deflecting means (18) on the one hand and the beam-deflecting means (18) on the other hand.

8. The multi-aperture imaging device in accordance with any of the preceding claims, wherein the diaphragm structure (22') comprises a magnetic material and wherein a magnetic field-providing element (44a, 44b) is arranged adjacent to the diaphragm structure (22'), and is configured to attract the diaphragm structure (22').

9. The multi-aperture imaging device in accordance with any of the preceding claims, wherein a transparent structure (42a, 42b) is arranged along a direction along which the optical paths are deflected, and is configured to at least partly reduce the entrance of particles to the beam-deflecting means (18), wherein a surface roughness of the diaphragm structure (22; 22') is greater than a surface roughness of the transparent structure (42a, 42b).

10. The multi-aperture imaging device in accordance with any of the preceding claims, wherein the diaphragm structure (22; 22') is formed to be elastic.

11. The multi-aperture imaging device in accordance with any of the preceding claims, wherein the beam-deflecting means (18) comprises a first reflective main side (174a) and a second reflective main side (174b), wherein the first and second reflective main sides (174a, 174b) are inclined relative to each other at an angle (δ) of at most 60°.

12. The multi-aperture imaging device in accordance with any of the preceding claims, wherein the array (14) comprises a transparent carrier (47) through which the optical channels (16a-h) pass and to which the optics (64a-h) are mounted.

13. The multi-aperture imaging device in accordance with any of the preceding claims, comprising focusing means for setting a focus of the multi-aperture imaging device by changing a distance between the array (14) and the beam-deflecting means (18).

14. An imaging system comprising a first module comprising a multi-aperture imaging device in accordance with any of claims 1 to 13 and a second module comprising a multi-aperture imaging device in accordance with any of claims 1 to 13, wherein the first and second modules are configured to capture the total field of view (71) at least stereoscopically.

15. A method (1200) for providing a multi-aperture imaging device, comprising the steps of:
providing (1210) an array (14) of optical channels so that each optical channel comprises optics for imaging a partial field of view of a total field of view onto an image sensor region of an image sensor;
arranging (1220) beam-deflecting means for deflecting an optical path of the optical channels to a viewing direction of the multi-aperture imaging device; and arranging (1230) a diaphragm structure in order to at least partly close a gap between the array and the beam-deflecting means;
so that the array (14) comprises, arranged at a distance to the beam-deflecting means (18), a carrier (47) for holding the optics (64a-h), a housing (31) of the array (14) or a transparent structure (42a, 42b) configured to at least partly reduce the entrance of particles to the beam-deflecting means (18), the distance forming the gap (29₁, 29₂); and
so that the diaphragm structure (22; 22') closes the gap by mechanical contact with the carrier (47), the housing (31) or the transparent structure (42a, 42b) on the one hand and the beam-deflecting means (18) on the other hand.

## Revendications

1. Dispositif d'imagerie à ouvertures multiples, avec:
un réseau (14) de canaux optiques (16a à h), où chaque canal optique (16a à h) comporte une optique (64a à h) destinée à reproduire un champ de vision partiel (72a à d) d'un champ de vision global (71) sur une zone (24a à h) d'un capteur d'image (12);
un dispositif de déviation de faisceau (18) destiné à dévier un trajet de faisceau (26a à h) des canaux optiques (16a à h) dans une direction de regard (27₁ ou 27₂) du dispositif d'imagerie à ouvertures multiples; et
une structure de diaphragme (22; 22') qui est aménagée pour obturer au moins partiellement un interstice (29₁, 29₂) entre le réseau (14) et le dispositif de déviation de faisceau (18);
dans lequel le réseau (14) présente, disposé à distance du dispositif de déviation de faisceau (18), un support (47) destiné à supporter les optiques (64a à h), un boîtier (31) du réseau (14) ou une structure transparente (42a, 42b) qui est conçue pour réduire au moins partiellement une entrée de particules dans le dispositif de déviation de faisceau (18 ), dans lequel la distance forme l'interstice (29₁, 29₂); et
dans lequel la structure de diaphragme (22; 22') obture l'interstice par contact mécanique avec le support (47), le boîtier (31) ou la structure transparente (42a, 42b), d'une part, et le dispositif de déviation de faisceau (18), d'autre part.

2. Dispositif d'imagerie à ouvertures multiples selon la revendication 1, dans lequel une dimension de l'interstice (29₁, 29₂) est variable en ce que le dispositif de déviation de faisceau (18) est commandé pour commuter entre une première et une deuxième position de rotation.

3. Dispositif d'imagerie à ouvertures multiples selon la revendication 1 ou 2, dans lequel les canaux optiques entre le réseau (14) et le dispositif de déviation de faisceau passent le long de l'interstice (29₁, 29₂) et de la structure de diaphragme (22, 22').

4. Dispositif d'imagerie à ouvertures multiples selon l'une des revendications précédentes, dans lequel est associée, à chaque champ de vision partiel (72 à d), une direction dans laquelle un trajet de faisceau (26a à h) d'un canal optique (16a à h) est dévié par le dispositif de déviation de faisceau (18), dans lequel la structure de diaphragme (22; 22') est conçue pour réduire au moins partiellement une entrée de lumière venant d'une direction qui est différente des directions associées aux champs de vision partiels dans la direction de regard (27₁, 27₂).

5. Dispositif d'imagerie à ouvertures multiples selon l'une des revendications précédentes, dans lequel la structure de diaphragme (22; 22') est disposée dans une direction dans laquelle les trajets de faisceau (26a à h) des canaux optiques (16a à h) s'étendent entre le réseau (14) et le dispositif de déviation de faisceau (18).

6. Dispositif d'imagerie à ouvertures multiples selon l'une des revendications précédentes, dans lequel le dispositif de déviation de faisceau (18) est conçu pour dévier, dans une première position, les trajets de faisceau (26a à h) dans une première direction de regard (27₁) et pour dévier, dans une deuxième position, les trajets de faisceau (26a à h) dans une deuxième direction de regard (272), dans lequel le dispositif de déviation de faisceau (18) est monté de manière mobile en rotation et est mobile en rotation entre la première position et la deuxième position.

7. Dispositif d'imagerie à ouvertures multiples selon la revendication 6, dans lequel la structure de diaphragme (22; 22') se trouve, dans la première position et dans la deuxième position, en contact mécanique avec, d'une part, le réseau (14) ou un structure transparente (42a, 42b) qui est conçue pour réduire au moins partiellement une entrée de particules dans le dispositif de déviation de faisceau (18) et, d'autre part, le dispositif de déviation de faisceau (18).

8. Dispositif d'imagerie à ouvertures multiples selon l'une des revendications précédentes, dans lequel la structure de diaphragme (22') comporte un matériau magnétique et dans lequel un élément fournissant un champ magnétique (44a, 44b) est disposé adjacent à la structure de diaphragme (22') et est conçu pour attirer la structure de diaphragme (22').

9. Dispositif d'imagerie à ouvertures multiples selon l'une des revendications précédentes, dans lequel une structure transparente (42a, 42b) est disposée dans une direction dans laquelle les trajets des faisceaux sont déviés et est conçue pour réduire au moins partiellement une entrée de particules dans le dispositif de déviation de faisceau (18), dans lequel une rugosité de surface de la structure de diaphragme (22; 22') est supérieure à une rugosité de surface de la structure transparente (42a, 42b).

10. Dispositif d'imagerie à ouvertures multiples selon l'une des revendications précédentes, dans lequel la structure de diaphragme (22; 22') est formée de manière élastique.

11. Dispositif d'imagerie à ouvertures multiples selon l'une des revendications précédentes, dans lequel le dispositif de déviation de faisceau (18) présente une première face principale réfléchissante (174a) et une deuxième face principale réfléchissante (174b), dans lequel la première et la deuxième face principale réfléchissante (174a, 174b) sont inclinées l'une par rapport à l'autre selon un angle (δ) de tout au plus 60°.

12. Dispositif d'imagerie à ouvertures multiples selon l'une des revendications précédentes, dans lequel le réseau (14) présente un support transparent (47) à travers lequel s'étendent les canaux optiques (16a à h) et auquel sont fixées les optiques (64a à h).

13. Dispositif d'imagerie à ouvertures multiples selon l'une des revendications précédentes, avec un dispositif de focalisation destiné à régler un foyer du dispositif d'imagerie à ouvertures multiples en modifiant une distance entre le réseau (14) et le dispositif de déviation de faisceau (18).

14. Système d'imagerie avec un premier module comportant un dispositif d'imagerie à ouvertures multiples selon l'une des revendications 1 à 13 et un deuxième module comportant un dispositif d'imagerie à ouvertures multiples selon l'une des revendications 1 à 13, dans lequel le premier et le deuxième module sont conçus pour détecter le champ de vision global (71) au moins de manière stéréoscopique.

15. Procédé (1200) pour fournir un dispositif d'imagerie à ouvertures multiples, aux étapes suivantes consistant à:
prévoir (1210) un réseau (14) de canaux optiques, de sorte que chaque canal optique comporte une optique destinée à reproduire un champ de vision partiel d'un champ de vision global sur une zone d'un capteur d'image;
disposer (1220) un dispositif de déviation de faisceau destiné à dévier un trajet de faisceau des canaux optiques dans une direction de regard du dispositif d'imagerie à ouvertures multiples; et
disposer (1230) une structure de diaphragme destinée à obturer au moins partiellement un interstice entre le réseau et le dispositif de déviation de faisceau;
de sorte que le réseau (14) présente, disposé à distance du dispositif de déviation de faisceau (18), un support (47) destiné à supporter les optiques (64a à h), un boîtier (31) du réseau (14) ou une structure transparente (42a, 42b) qui est conçue pour réduire au moins partiellement une entrée de particules dans le dispositif de déviation de faisceau (18), où la distance forme l'interstice (29₁, 29a); et
de sorte que la structure de diaphragme (22; 22') obture l'interstice par contact mécanique avec le support (47), le boîtier (31) ou la structure transparente (42a, 42b), d'une part, et le dispositif de déviation de faisceau (18), d'autre part.
